(19) Europäisches Patentamt
European Patent Office
Office européen des brevets

(11) EP 2 213 697 B1

(12) **EUROPEAN PATENT SPECIFICATION**

(45) Date of publication and mention of the grant of the patent:
**04.09.2013 Bulletin 2013/36**

(21) Application number: **09750436.9**

(22) Date of filing: **08.04.2009**

(51) Int Cl.:
***C08G 77/458*** (2006.01) ***B32B 15/095*** (2006.01)
***B32B 27/40*** (2006.01) ***C08F 20/26*** (2006.01)
***C08G 18/38*** (2006.01) ***C09D 5/02*** (2006.01)
***C09D 133/08*** (2006.01) ***C09D 175/04*** (2006.01)
***C09D 183/10*** (2006.01) ***C08F 220/18*** (2006.01)
***C08G 18/08*** (2006.01) ***C08G 18/28*** (2006.01)
***C08G 81/02*** (2006.01) *C08G 18/48* (2006.01)
*C08G 18/75* (2006.01) *C09D 5/08* (2006.01)
*C08L 83/10* (2006.01) *C09D 5/16* (2006.01)
*C09J 175/04* (2006.01) *C08G 18/10* (2006.01)
*C08G 18/44* (2006.01)

(86) International application number:
**PCT/JP2009/057157**

(87) International publication number:
**WO 2009/142074 (26.11.2009 Gazette 2009/48)**

(54) **AQUEOUS HYBRID RESIN COMPOSITION, COATING PREPARATION CONTAINING THE SAME, AND LAMINATE THEREWITH**

WASSERHALTIGE HARZVERBUNDZUSAMMENSETZUNG, BESCHICHTUNGSMITTEL DIESE ENTHALTEND UND DAMIT HERGESTELLTES LAMINAT

COMPOSITION AQUEUSE DE RÉSINE COMPOSITE, AGENT DE REVÊTEMENT LA CONTENANT ET CORPS MULTICOUCHE UTILISANT L'AGENT DE REVÊTEMENT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **22.05.2008 JP 2008134159**
**09.09.2008 JP 2008230857**
**30.01.2009 JP 2009019620**

(43) Date of publication of application:
**04.08.2010 Bulletin 2010/31**

(73) Proprietor: **DIC Corporation**
**Tokyo 174-8520 (JP)**

(72) Inventors:
- **MATSUZAWA, Hiroshi**
**Takaishi-shi**
**Osaka 592-0001 (JP)**
- **MATSUOKA, Ryuichi**
**Takaishi-shi**
**Osaka 592-0001 (JP)**
- **NAGAHAMA, Sadamu**
**Takaishi-shi**
**Osaka 592-0001 (JP)**
- **SHIRAKAMI, Jun**
**Takaishi-shi**
**Osaka 592-0001 (JP)**
- **TANAKA, Kazunori**
**Takaishi-shi**
**Osaka 592-0001 (JP)**

(74) Representative: **Albrecht, Thomas**
**Kraus & Weisert**
**Patent- und Rechtsanwälte**
**Thomas-Wimmer-Ring 15**
**80539 München (DE)**

(56) References cited:
**JP-A- 4 310 547** **JP-A- 11 209 473**
**JP-A- 11 209 475** **JP-A- 11 279 408**
**JP-A- 2003 026 927** **JP-A- 2003 027 254**
**JP-A- 2003 253 021** **JP-A- 2005 154 587**
**JP-A- 2006 328 354** **JP-A- 2007 308 588**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

The present invention relates to an aqueous hybrid resin composition which can be used in various applications including coating preparations and adhesive preparations.

Background Art

There is a demand for a coating preparation which is capable of forming a coating film which not only confers design properties to various substrates, but also has excellent durability to enable the prevention of the deterioration of the substrates. In particular recently, coating preparations which are capable of forming coating films having durability or weather resistance at such a level that even when an organic solvent or acidic rain is adhered onto the surface of a coating film, the dissolution or peeling of the coating film, the reduction in the gloss, the generation of cracks, is not caused, are in demand in the industrial field.

As the aforementioned coating preparation which is capable of forming a coating film having excellent durability or weather resistance, for example, an aqueous resin further obtained by mixing a hybrid resin (C) consisting of a specific polysiloxane segment (A) and a polymer segment (B) having a hydrophilic group, and a specific polysiloxane (D), and if necessary, dispensing a condensate of a part of the mixture in an aqueous medium has been known (see, for example, Patent Literature 1).

However, a coating film formed using the aforementioned aqueous resin is relatively hard, and accordingly, when it is used to coat the surface of a substrate that easily undergoes deformation or stretching by effects such as an external force, changes in temperature, the aforementioned coating film cannot conform to the deformation of the substrates, and as a result, there may have been some cases where the peeling or the generation of cracks in the coating film occurred.

On the other hand, along with the recent increase in demand for metals, the demand for coating preparations for protecting the surface of metal substrates including steel plates has increased. Such coating preparations are required to have durability, weather resistance, at a level much higher than the aforementioned level.

As a method for allowing a metal substrate to provide excellent durability, a method including applying a paint containing a chromate on the surface of a metal substrate, generally called a chromate treatment, thereby forming a coating film, has been frequently carried out in the past.

However, a chromate contained in a paint used for the chromate treatment has very high toxicity, and particularly, a 6-valent chromium compound is a highly detrimental material designated as an oncogenic material by many public organizations, and therefore, coating preparations for metal substrates containing no chromate have been recently investigated.

As the coating preparations for metal substrates containing no chromate, so-called chromium-free coating preparations for metal substrates, for example, a metal surface treatment composition which contains a carboxylic group-containing urethane resin, silica particles, an aziridinyl group- or oxazoline group-containing compound, a vanadic acid compound, and a zirconium compound (see, for example, Patent Literature 2), and an aqueous resin composition for the treatment of an aluminum-zinc alloy plated steel plate, which contains a specific anionic polyurethane resin, a silane coupling agent, and a watersoluble zirconium compound have been known (see, for example, Patent Literature 3).

However, there may have been cases in which it was difficult to form a coating film having durability at a level compatible with that of a conventional coating film formed by using a paint containing a chromate, in the chromium-free, metal surface treatment composition.

In addition, the coating preparation for a metal substrate is required to be capable of forming a coating film having corrosion resistance at a level enabling the prevention of generation of rust on the surface of the metal substrate, or the extension of peeling or swelling of the coating film due to rust, in addition to the durability or weather resistance, but there may have been some cases where the aforementioned metal surface treatment composition caused the spread of rust of the metal substrate over time, the peeling of the coating film caused thereby.

In addition, the metal substrate is generally molded in a shape corresponding to an application by a punching method, a pressing molding method, and used in a final product. It is general that a coating film is formed on the surface of the metal substrate by the surface treatment composition before the molding.

However, there might have been cases where, in the case where the coating film is relatively hard, the coating film cannot conform to the deformation of the metal substrate, cracks are generated on the coating film surface, or rust is generated on the crack parts.

Moreover, the coating preparation which is capable of forming a coating film having durability may be required to be used for surface protection of plastic products susceptible to deterioration due to adhesion of acidic rain in many cases.

Examples of the plastic products include mobile phones, domestic electrical appliances, OA instruments, automobile equipment materials, and for these products, plastic materials having characteristics corresponding to applications are used.
For the plastic materials, various kinds of plastic materials have been developed, and examples thereof include an acrylonitrile-butadiene-styrene resin (ABS resin), a polycarbonate resin (PC resin), an ABS/PC resin, a polystyrene resin (PS resin), a polymethyl methacrylate resin (PMMA resin), as found in various fields.
However, the plastic materials include those generally known as a substrate to which a coating film is hard to adhere, such as a polymethyl methacrylate resin, and for such a hardly adhesive plastic substrate, it is also required to develop a coating preparation having excellent close adhesion.
As the coating preparation having good close adhesion to a plastic substrate, for example, a paint composition for a plastic, which contains an acryl resin obtained by the polymerization of polymerizable monomers containing 70 to 95% by weight of methyl methacrylate, an acryl resin obtained by the polymerization of 50% by weight or less of methyl methacrylate, and an urethanated adduct consisting of 3 moles of hexamethylene diisocyanate and 1 mole of trimethylolpropane is known (see, for example, Patent Literature 4).
However, for the paint composition for a plastic, there may have been cases that when it is exposed to solar light, wind and rain, over a long period of time, it causes partial dissolution or peeling of the coating film, and as a result, deterioration of the plastic substrates occurs.

List of Literatures

Patent Literatures

Patent Literature 1: Japanese Unexamined Patent Application, First Publication No. H11-279408
Patent Literature 2: Japanese Unexamined Patent Application, First Publication No. 2003-27254
Patent Literature 3: Japanese Unexamined Patent Application, First Publication No. 2004-204333
Patent Literature 4: Japanese Unexamined Patent Application, First Publication No. 2003-253021

Disclosure of Invention

Technical Problem

The problem to be solved by the present invention is to provide an aqueous hybrid resin composition which is capable of forming a coating film having excellent durability, weather resistance, and elongation with respect to substrates.
Also, a further problem to be solved by the present invention is related to a coating preparation for a metal, which is capable of forming a coating film having excellent corrosion resistance at such a level that the swelling or peeling of the coating film due to the rust which may be generated on a metal substrate can be prevented, as well as having excellent durability, weather resistance, and elongation with respect to substrates, when applied exclusively onto a metal substrate.
In addition, another problem to be solved by the present invention is to provide a coating preparation for a plastic substrate, which is capable of forming a coating film having excellent close adhesion to generally known various plastic substrates as well as excellent durability, weather resistance, and elongation with respect to a substrate, when applied exclusively onto a plastic substrate.

Technical Solution

The present inventors have conducted investigations with the aqueous resin described in Patent Literature 1 above as a substrate, and investigations on the combined use of a urethane resin as a method for providing good elongation with respect to substrates for the aqueous resin.
Specifically, they have conducted studies on various physical properties of a coating film formed using a resin composition containing the aqueous resin described in the aforementioned Patent Literature 1 and a general hydrophilic group-containing polyurethane.
However, since the aforementioned resin composition does not have sufficient compatibility between the aqueous resin and the urethane resin, there have been cases that remarkable deterioration in the durability or weather resistance of the formed coating film occurs. Also, the elongation with respect to substrates of the coating film was still insufficient.
Furthermore, the present inventors have conducted investigations on an aqueous dispersion of the resins in which the aqueous resin and the hydrophilic group-containing polyurethane are not mixed as described above, but

chemically bound to each other.
Specifically, they have conducted studies on a composition of an aqueous hybrid resin in which a vinyl polymer constituting the aqueous resin described in the aforementioned Patent Literature 1 and the hydrophilic group-containing polyurethane are chemically bound through a polysiloxane structure.

The coating film formed using the aqueous hybrid resin composition had good elongation with respect to substrates, but it was still not at a level sufficient for practical use in terms of durability and weather resistance.

However, investigations have been conducted on an aqueous hybrid resin in which the weight ratio of a structure derived from a polysiloxane relative to the entirety of the aqueous hybrid resin is adjusted to a range from 15 to 55% by weight, and as a result, they have unexpectedly found that a coating film having remarkably improved durability and weather resistance can be formed, and a coating film further having excellent elongation with respect to substrates can also be formed.

That is, the present invention relates to an aqueous hybrid resin composition containing a hybrid resin (A) in which a hydrophilic group-containing polyurethane (a1) is bound to a vinyl polymer (a2) through a polysiloxane (a3), and an aqueous medium, wherein the weight ratio of the structure derived from the aforementioned polysiloxane (a3) relative to the entire hybrid resin (A) is in the range of 15 to 55% by weight, and relates to a coating preparation for a metal substrate and a coating preparation for a plastic substrate, each containing the same.

Furthermore, the present invention relates to a method for preparing the aqueous hybrid resin composition, including the following (I) to (IV) steps:

(I) a step of obtaining a solution of a vinyl polymer (a2) in an organic solvent by the polymerization of vinyl monomers containing at least one selected from the group consisting of hydrolyzable silyl group-containing vinyl monomers and silanol group-containing vinyl monomers in the presence of an organic solvent,
(II) a step of obtaining a solution of a resin (C) in an organic solvent, in which a polysiloxane (a3) is bound to the vinyl polymer (a2), by reacting the vinyl polymer (a2) with a silane compound in a solution of the vinyl polymer (a2) in an organic solvent,
(III) a step of obtaining a solution of a hybrid resin (A) in an organic solvent, in which the vinyl polymer (a2) is bound to the hydrophilic group-containing polyurethane (a1) through the polysiloxane (a3) by mixing and reacting the resin (C) with the hydrophilic group-containing polyurethane (a1), and
(IV) a step of neutralizing a hydrophilic group contained in the hybrid resin (A), and dissolving or dispersing the neutralized product in an aqueous medium.

## Advantageous Effects

The aqueous hybrid resin composition of the present invention can be used for coating preparations or adhesive preparations since it has good close adhesion to various substrates such as metal substrates, plastic substrates, inorganic substrates, fibrous substrates, fabric substrates, paper. In particular, the aqueous hybrid resin composition of the present invention can be suitably used for a coating preparation for forming a primer layer, a coating preparation for forming a top coating layer, of various substrates since it is capable of forming a coating film having excellent durability and weather resistance.
In addition, the aqueous hybrid resin composition of the present invention can be suitably used as a coating preparation for coating the surface of metal substrates including plated steel plates such as a zinc plated steel plate, and an aluminum-zinc alloy steel plate, or an aluminum plate, an aluminum alloy plate, an electromagnetic steel plate, a copper plate, a stainless steel plate, which are used, for example, for construction members such as outer walls, roofs civil engineering members such as guard rails, sound-proof walls, water supply grooves, domestic electrical appliances, industrial machines, automobile parts, etc., or as a coating preparation for forming a primer coating layer between various steel plates as above and a top coating layer since it is capable of forming a coating film having excellent durability and weather resistance as well as excellent rust resistance.
Moreover, the aqueous hybrid resin composition of the present invention can be suitably used as a coating preparation for coating the surface of plastic products such as, for example, mobile phones, domestic electrical appliances, OA instruments, automobile interior parts, since it has excellent close adhesion to various plastic substrates including a polycarbonate substrate and an acrylonitrile-butadiene-styrene substrate.

In addition, the aqueous hybrid resin composition of the present invention can be used, for example, as an adhesive preparation for a film having various functions, which constitutes polarizing plates since it is capable of forming a coating film having excellent elongation with respect to substrates.

## Best Mode for Carrying out the Invention

The present invention is directed to an aqueous hybrid resin composition containing a hybrid resin (A) in which

a hydrophilic group-containing polyurethane (a1) is bound to a vinyl polymer (a2) through a polysiloxane (a3), and an aqueous medium, and if necessary, other additives, wherein the weight ratio of the structure derived from the polysiloxane (a3) relative to the entire hybrid resin (A) is in the range of 15 to 55% by weight.

The aforementioned hybrid resin (A) is dispersed in an aqueous medium, but a part of the hybrid resin (A) may be dissolved in an aqueous medium. The hybrid resin (A) dispersed in the aqueous medium which has an average particle size ranging from 10 to 500 nm, is preferable for forming a coating film having excellent elongation with respect to substrates as well as excellent durability or weather resistance such as crack resistance. In addition, the average particle size as mentioned herein refers to a value measured by a method for determining a particle size distribution in a measurement principle for detecting dynamic scattering light of the particles.

Further, it is important that the aforementioned hybrid resin (A) contain 15 to 55% by weight of a structure derived from the aforementioned polysiloxane (a3) relative to the entire hybrid resin (A) to form a coating film having excellent durability and weather resistance. For example, the hybrid resin in which the weight ratio of the polysiloxane (a3) is 10% by weight enables a coating film having relatively good elongation with respect to substrates to be formed, but there may be cases where such a coating film is not sufficient in view of the durability and weather resistance, and peeling from a substrate occurs over time.

On the other hand, for the composition containing the hybrid resin in which the weight ratio of the structure derived from the polysiloxane (a3) is 65% by weight has the reduced film forming property according to reduction in the weight ratio of the hydrophilic group-containing polyurethane (a1) or the structure derived from the vinyl polymer (a2), and as a result, there may be cases where cracks are generated on the coating film surface.

It is preferable that the weight ratio of the structure derived from the polysiloxane (a3) relative to the entire hybrid resin (A) be in the range of 20% by weight to 35% by weight for formation of a coating film having excellent durability and weather resistance as well as elongation with respect to substrates.

In addition, the structure derived from the aforementioned polysiloxane (a3) refers to a structure in which a main chain constituting the linking moiety of the hydrophilic group-containing polyurethane (a1) and the vinyl polymer (a2) of the hybrid resin (A) consists of an oxygen atom and a silicon atom. In addition, the weight ratio of the structure derived from the aforementioned polysiloxane (a3) is a value determined considering production of by-products such as methanol, ethanol, that can be produced by a hydrolysis/condensation reaction of the polysiloxane (a3), on the basis of the ratio of the raw materials introduced for the preparation of the hybrid resin (A).

In addition, it is necessary that the hybrid resin (A) have a hydrophilic group in order to be stably dispersed in an aqueous medium.

It is necessary for the hydrophilic group to be present in the polyurethane (a1) constituting the outer layer of the aforementioned hybrid resin (A), but the hydrophilic group may be present in the aforementioned vinyl polymer (a2), if desired.

As the aforementioned hydrophilic group, an anionic group, a cationic group, and a nonionic group can be used, but among these, an anionic group is more preferably used.

As the aforementioned anionic group, for example, a carboxylic group, a carboxylate group, a sulfonic acid group, a sulfonate group, can be used, and among these, a carboxylate group or sulfonate group, a part or all of which is neutralized with a basic compound is preferably used to prepare a hybrid resin having good water dispersability.

Examples of the basic compound which can be used to neutralize the aforementioned anionic group include organic amines such as ammonia, triethylamine, pyridine, morpholine, alkanolamine such as monoethanolamine, metal basic compounds including Na, K, Li, Ca, etc.

In the case where a carboxylate group or a sulfonate group is used as the anionic group, it is preferable that the group be present at an amount in the range of 50 to 1,000 mmol/kg, relative to the entire hybrid resin (A), to maintain good water dispersion stability of the aqueous hybrid resin (A) particles.

In addition, as the aforementioned cationic group, for example, a tertiary amino group can be used.

As the acid which can be used to neutralize a part or all of the aforementioned tertiary amino groups, for example, organic acids such as acetic acid, propionic acid, lactic acid, maleic acid, organic sulfonic acids such as sulfonic acid, methanesulfonic acid, inorganic acids such as hydrochloric acid, sulfuric acid, orthophosphoric acid, orthophosphorous acid, etc. can be used alone or in combination of two or more kinds thereof.

In addition, as a quaternizing agent which can be used for quaternization of a part or all of the tertiary amino group, for example, dialkyl sulfuric acids such as dimethyl sulfate, diethyl sulfate, halogenated alkyls such as methyl chloride, ethyl chloride, benzyl chloride, alkyls such as methyl methanesulfonate, methyl toluenesulfonate, or epoxides such as ethylene oxide, propylene oxide, epichlorohydrin, can be used singly or in combination of two or more kinds thereof.

Further, as the nonionic group, for example, polyoxyalkylene groups such as a polyoxyethylene group, a polyoxybutylene group, a poly(oxyethylene-oxypropylene) group, and a polyoxyethylene-polyoxypropylene group, can be used. Among these, polyoxyalkylene groups having oxyethylene units are preferably used to further improve the hydrophilicity.

Moreover, as the aforementioned hybrid resin (A), those having a weight ratio ((a2)/(a1)) of the hydrophilic group-containing polyurethane (a1) to the vinyl polymer (a2) in the range of 1/1 to 1/20 are preferred, and those having the weight ratio in the range of 1/1 to 1/12 are more preferred, to form a coating film having excellent elongation with respect to substrates as well as excellent durability and weather resistance.

In addition, the bond between the aforementioned hydrophilic group-containing polyurethane (a1) and the aforementioned polysiloxane (a3) is preferably formed, for example, by the reaction of a hydrolyzable silyl group and/or silanol group contained in the aforementioned hydrophilic group-containing polyurethane (a1) with a hydrolyzable silyl group and/or silanol group contained in the aforementioned polysiloxane (a3). In addition, the bond between the aforementioned vinyl polymer (a2) and the aforementioned polysiloxane (a3) is preferably formed by the reaction of a hydrolyzable silyl group and/or silanol group contained in the aforementioned vinyl polymer (a2) with a hydrolyzable silyl group and/or silanol group contained in the aforementioned polysiloxane (a3).

Next, the hydrophilic group-containing polyurethane (a1) constituting the aforementioned hybrid resin (A) will be described.

The aforementioned hydrophilic group-containing polyurethane (a1) is an essential component to provide excellent elongation with respect to substrates for the aqueous hybrid resin composition of the present invention.

Various kinds of the hydrophilic group-containing polyurethane (a1) can be used, but for example, those having a number average molecular weight of 3,000 to 100,000 are preferably used, and those having a number average molecular weight of 5,000 to 10,000 are preferably used to form a coating film having excellent elongation with respect to substrates as well as excellent durability and weather resistance.

It is necessary that the aforementioned hydrophilic group-containing polyurethane (a1) contain a hydrophilic group in order to provide water dispersion stability for the aforementioned hybrid resin (A). The hydrophilic group is preferably present at an amount in the range of 50 to 1,000 mmol/kg, relative to the entire hydrophilic group-containing polyurethane (a1), in order to provide superior water dispersibility for the hybrid resin.

As the aforementioned hydrophilic group-containing polyurethane (a1), for example, a polyurethane obtained by the reaction of a polyol with a polyisocyanate can be used. The hydrophilic group contained in the aforementioned hydrophilic group-containing polyurethane (a1), which is one of the components constituting a polyol, can be introduced into the aforementioned hydrophilic group-containing polyurethane (a1), for example, by using a hydrophilic group-containing polyol.

As the polyol which can be used to prepare the aforementioned hydrophilic group-containing polyurethane (a1), for example, the aforementioned hydrophilic group-containing polyol and other polyols can be used in combination.

As the aforementioned hydrophilic group-containing polyol, for example, carboxylic group-containing polyols such as 2,2'-dimethylolpropionic acid, 2,2'-dimethylolbutanoic acid, 2,2'-dimethylollactic acid, 2,2'-dimethylolvaleric acid, or sulfonic acid group-containing polyols such as 5-sulfoisophthalic acid, sulfoterephthalic acid, 4-sulfophthalic acid, 5 [4-sulfophenoxy]isophthalic acid, can be used. In addition, as the aforementioned hydrophilic group-containing polyol, the hydrophilic group-containing polyester polyols obtained by the reaction of the aforementioned hydrophilic group-containing polyol having a low molecular weight with various polycarboxylic acids such as adipic acid, etc. can be used.

The other polyols which can be used in combination with the aforementioned hydrophilic group-containing polyol can be suitably used according to the characteristics required for the aqueous hybrid resin composition of the present invention, the applications to which the aqueous hybrid resin composition is applied, and as the other polyols, for example, polyether polyol, polyester polyol, polycarbonate polyol, can be used.

Since the polyether polyol can provide the aqueous hybrid resin composition of the present invention particularly with excellent elongation with respect to substrates, it is preferably used in combination with the aforementioned hydrophilic group-containing polyol.

As the polyether polyol, for example, those obtained by the addition polymerization of alkylene oxides using one or more kinds of the compounds having at least 2 active hydrogen atoms as an initiator can be used.

As the initiator, for example, ethylene glycol, diethylene glycol, triethylene glycol, propylene glycol, trimethylene glycol, 1,3-butanediol, 1,4-butanediol, 1,6-hexanediol, neopentyl glycol, glycerin, trimethylolethane, trimethylolpropane, can be used.

In addition, as the aforementioned alkylene oxide, for example, ethylene oxide, propylene oxide, butylene oxide, styrene oxide, epichlorohydrin, tetrahydrofuran, can be used.

In addition, as the aforementioned polyester polyol, for example, aliphatic polyester polyol or aromatic polyester polyol obtained by the esterification reaction of a polyol having a low molecular weight and a polycarboxylic acid; a polyester obtained by the ring-opening polymerization reaction of cyclic ester compounds such as ε-caprolactone or the like; a copolymerization polyester thereof; can be used.

As the aforementioned polyol having a low molecular weight, for example, ethylene glycol, propylene glycol, can be used.

In addition, as the aforementioned polycarboxylic acid, for example, succinic acid, adipic acid, sebacic acid, dodecanedicarboxylic acid, terephthalic acid, isophthalic acid, phthalic acid, and an anhydride or an ester-forming derivative thereof, can be used.

In addition, the polycarbonate polyol which can be used to prepare the aforementioned hydrophilic group-containing polyurethane (a1) is preferable to remarkably improve the close adhesion of the aqueous hybrid resin composition of the present invention to a plastic substrate.
As the aforementioned polycarbonate polyol, for example, those obtained by the reaction of a carbonic ester with polyol, those obtained by the reaction of phosgene with bisphenol A, can be used.

As the aforementioned carbonic ester, methyl carbonate, dimethyl carbonate, ethyl carbonate, diethyl carbonate, cyclocarbonate, diphenyl carbonate, can be used.

As the polyol which can react with the aforementioned carbonic ester, for example, dihydroxy compounds having a relatively low molecular weight, such as ethylene glycol, diethylene glycol, triethylene glycol, 1,2-propylene glycol, 1,3-propylene glycol, dipropylene glycol, 1,4-butanediol, 1,3-butanediol, 1,2-butanediol, 2,3-butanediol, 1,5-pentanediol, 1,5-hexanediol, 2,5-hexanediol, 1,6-hexanediol, 1,7-heptanediol, 1,8-octanediol, 1,9-nonanediol, 1,10-decanediol, 1,11-undecanediol, 1,12-dodecanediol, 3-methyl-1,5-pentanediol, 2-ethyl-1,3-hexanediol, 2-methyl-1,3-propanediol, 2-methyl-1,8-octanediol, 2-butyl-2-ethylpropanediol, 2-methyl-1,8-octanediol, neopentyl glycol, 1,4-cyclohexanediol, 1,4-cyclohexanedimethanol, hydroquinone, resorcine, bisphenol-A, bisphenol-F, 4,4'-biphenol, polyether polyols such as polyethylene glycol, polypropylene glycol, polytetramethylene glycol; polyester polyols such as polyhexamethylene adipate, polyhexamethylene succinate, polycaprolactone; can be used.

As the aforementioned polycarbonate polyol, those obtained by the reaction of dimethyl carbonate with 1,6-hexanediol are further preferred from the viewpoint of compatibility between the excellent close adhesion to a plastic substrate and the excellent elongation with respect to substrates as well as low price.

In addition, as the aforementioned polycarbonate polyol, those having a number average molecular weight in the range of 500 to 6,000 are preferably used.

The aforementioned polycarbonate polyol is preferably used in an amount in the range of 30 to 95% by weight relative to the total amount of the polyol and the polyisocyanate, used to prepare the aforementioned polyurethane (a1), from the viewpoint of compatibility between the close adhesion to a plastic substrate and the weather resistance and durability.

The aqueous hybrid resin composition of the present invention obtained by using the aforementioned polycarbonate polyol can be used only as a coating preparation for a plastic substrate since it has excellent close adhesion particularly to various plastic substrates generally known to be hardly adhesive substrates, such as a polycarbonate substrate, a polyester substrate, an acrylonitrile-butadiene-styrene substrate, a polyacryl substrate, a polystyrene substrate, a polyurethane substrate, an epoxy resin substrate, a polyvinyl chloride-based substrate, and a polyamide-based substrate.

In addition, as the polyisocyanate which is used to prepare the aforementioned hydrophilic group-containing polyurethane (a1), for example, aromatic diisocyanates such as phenylene diisocyanate, tolylene diisocyanate, diphenylmethane diisocyanate, naphthalene diisocyanate; aliphatic or aliphatic cyclic structure-containing diisocyanates such as hexamethylene diisocyanate, lysin diisocyanate, cyclohexane diisocyanate, isophorone diisocyanate, dicyclohexylmethane diisocyanate, xylene diisocyanate, tetramethylxylene diisocyanate; can be used alone or in combination of two or more kinds thereof. Among these, aliphatic cyclic structure-containing diisocyanates are preferably used since a coating film having excellent long-term weather resistance can be formed.

The aforementioned hydrophilic group-containing polyurethane resin (a1) may have functional groups other than the above-described hydrophilic group, if desired. Examples of such a functional group include a hydrolyzable silyl group or silanol group, an amino group, an imino group, a hydroxyl group, that can react with the aforementioned polysiloxane (a3) to be described later, and among these, the hydrolyzable silyl group is preferred since a coating film having excellent long-term weather resistance can be formed.

The hydrolyzable silyl group which may be contained in the aforementioned hydrophilic group-containing polyurethane (a1) is a functional group in which a hydrolyzable group is directly bound to a silicon atom, and examples thereof include a functional group represented by the following general formula:

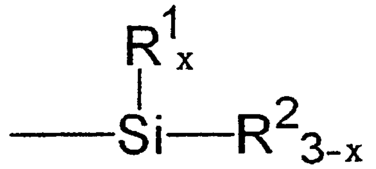

(1)

wherein $R^1$ is a mono-valent organic group such as an alkyl group, an aryl group, an aralkyl group; $R^2$ is a halogen atom, an alkoxy group, an acyloxy group, a phenoxy group, an aryloxy group, a mercapto group, an amino

group, an amide group, an aminooxy group, an iminooxy group, or an alkenyloxy group; and x is an integer ranging from 0 to 2.

Examples of the aforementioned alkyl group include a methyl group, an ethyl group, a propyl group, an isopropyl group, a butyl group, an isobutyl group, a pentyl group, a neopentyl group, a 1-methylbutyl group, a 2-methylbutyl group, a hexyl group, an isohexyl group.

Examples of the aryl group include a phenyl group, a naphthyl group, a 2-methylphenyl group, and examples of the aralkyl group include a benzyl group, a diphenylmethyl group, a naphthylmethyl group.

Examples of the aforementioned halogen atom include a fluorine atom, a chlorine atom, a bromine atom, an iodine atom.

Examples of the aforementioned alkoxy group include a methoxy group, an ethoxy group, a propoxy group, an isopropoxy group, a butoxy group.

Examples of the aforementioned acyloxy group include acetoxy, propanoloxy, butanoloxy, phenylacetoxy, and acetoacetoxy groups. Examples of the aforementioned aryloxy group include phenyloxy, naphthyloxy, and examples of the aforementioned alkenyloxy group include an allyloxy group, a 1-propenyloxy group, an isopropenyloxy group.

The aforementioned $R^2$ is preferably each independently an alkoxy group in view of easy removal of a leaving component such as a group represented by a general formula $R^2OH$, which can be produced by hydrolysis.

In addition, the silanol group which may be contained in the aforementioned hydrophilic group-containing polyurethane (a1) is a functional group in which a hydroxyl group is directly bound to a silicon atom, and is a functional group, which is usually produced by the hydrolysis of the aforementioned hydrolyzable silyl group.

The aforementioned hydrolyzable silyl group and the silanol group are preferably present at an amount in the range of 10 to 400 mmol/kg, relative to the entire hydrophilic group-containing polyurethane (a1), in view of ensuring the good water dispersion stability of the hybrid resin.

Next, the vinyl polymer (a2) constituting the aforementioned hybrid resin (A) will be described.

The aforementioned vinyl polymer (a2) is one that can be bound to the aforementioned hydrophilic group-containing polyurethane (a1) through the aforementioned polysiloxane (a3) described below.

As the aforementioned vinyl polymer (a1), those having a number average molecular weight ranging from 3,000 to 100,000 are preferably used, and those having a number average molecular weight ranging from 5,000 to 25,000 are preferably used to form a coating film having excellent elongation with respect to substrates as well as excellent durability such as crack resistance, and weather resistance.

As the aforementioned vinyl polymer (a1), for example, those prepared by the polymerization of various vinyl monomers in the presence of a polymerization initiator can be used.

As the aforementioned vinyl monomer, a hydrolyzable silyl group-containing vinyl monomer or a hydroxyl group-containing vinyl monomer is preferably used from the viewpoint of introducing a functional group that can react with a hydrolyzable silyl group contained in the aforementioned polysiloxane (a3) into the vinyl polymer (a1).

As the hydrolyzable silyl group-containing vinyl monomer, for example, 3-(meth)acryloyloxypropyltrimethoxysilane, 3-(meth)acryloyloxypropyltriethoxysilane, 3-(meth)acryloyloxypropylmethyldimethoxysilane, can be used, and among these, 3-(meth)acryloyloxypropyltrimethoxysilane is preferably used.

In addition, as the aforementioned hydroxyl group-containing vinyl monomer, for example, 2-hydroxyethyl (meth) acrylate, 2-hydroxypropyl (meth)acrylate, polyethylene glycol mono(meth)acrylate, glycerol mono(meth)acrylate, can be used.

As the aforementioned vinyl monomer, other vinyl monomers may be used in combination, if necessary, in addition to the aforementioned hydrolyzable silyl group-containing vinyl monomer, the hydroxyl group-containing vinyl monomer.

As the aforementioned other vinyl monomer, for example, (meth)acrylic esters such as methyl (meth)acrylate, ethyl (meth)acrylate, n-butyl (meth)acrylate; tertiary amino group-containing vinyl monomers such as N,N-dimethylaminoethyl (meth)acrylate; secondary amino group-containing vinyl monomers such as N-methylaminoethyl (meth)acrylate; vinyl monomers containing a basic nitrogen atom-containing group including primary amino group-containing vinyl monomers such as aminomethyl acrylate; fluorine-containing vinyl monomers such as 2,2,2-trifluoroethyl (meth)acrylate; vinyl esters such as vinyl acetate; vinyl ethers such as methyl vinyl ether; nitriles of unsaturated carboxylic acids, such as (meth)acrylonitrile; aromatic ring-containing vinyl compounds such as styrene; $\alpha$-olefins such as isoprene, epoxy group-containing vinyl monomers such as glycidyl (meth)acrylate; amide group-containing vinyl monomers such as (meth)acrylamide; vinyl monomers containing a methylolamide group and an alkoxylated product thereof, such as N-methylol (meth)acrylamide; aziridinyl group-containing vinyl monomers such as 2-aziridinylethyl (meth)acrylate; isocyanate group-and/or blocked isocyanate group-containing vinyl monomers such as (meth)acryloyl isocyanate; oxazoline group-containing vinyl monomers such as 2-isopropenyl-2-oxazoline; cyclopentenyl group-containing vinyl monomers such as dicyclopentenyl (meth)acrylate; carbonyl group-containing vinyl monomers such as acrolein; acetoacetyl group-containing vinyl monomers such as acetoacetoxyethyl (meth)acrylate; carboxylic group-containing monomers such as (meth)acrylic acid, maleic acid, a semi-ester or salt thereof, etc. can be used alone or in combination of two or more

kinds thereof.

As the polymerization initiator which can be used to prepare the aforementioned vinyl polymer (a2), for example, radical polymerization initiators such as persulfates, organic peroxides, hydrogen peroxide, or azo initiators such as 4,4'-azobis(4-cyanovaleric acid), 2,2'-azobis(2-amidinopropane) dihydrochloride, can be used. In addition, the radical polymerization initiator may be used as, for example, a redox polymerization initiator in combination with a reducing agent such as ascorbic acid.

Examples of the aforementioned persulfates which are representative of the polymerization initiators include potassium persulfate, sodium persulfate, ammonium persulfate, and as the organic peroxides, specifically, for example, diacyl peroxides such as benzoyl peroxide, lauroyl peroxide, decanoyl peroxide, dialkyl peroxides such as t-butylcumyl peroxide, dicumyl peroxide, peroxyesters such as t-butyl peroxylaurate, t-butyl peroxybenzoate, hydroperoxides such as cumene hydroperoxide, paramenthane hydroperoxide, t-butyl hydroperoxide, etc. can be used.

The amount of the polymerization initiator to be used may be an amount allowing the polymerization to smoothly proceed, but it is preferably equal to or less than 10% by weight relative to the total amount of the vinyl monomers used to prepare the vinyl polymer (a2).

Next, the polysiloxane (a3) constituting the aforementioned hybrid resin (A) will be described.
The aforementioned polysiloxane (a3) constitutes a linking part between the aforementioned hydrophilic group-containing polyurethane (a1) and the aforementioned vinyl polymer (a2).

The aforementioned polysiloxane (a3) has a chained structure containing silicon atoms and oxygen atoms, and if necessary, a hydrolyzable silyl group or silanol group.

The aforementioned hydrolyzable silyl group is a group of atoms in which a hydrolyzable group is directly bound to the aforementioned silicon atom, and as the hydrolyzable silyl group, for example, those having a structure represented by the general formula (I) as exemplified in the description of the aforementioned hydrophilic group-containing polyurethane (a1) can be used.

The aforementioned hydrolyzable group is a group capable of forming a hydroxyl group by the effect of water. Examples thereof include a halogen atom, an alkoxy group, a substituted alkoxy group, an acyloxy group, a phenoxy group, a mercapto group, an amino group, an amide group, an aminooxy group, an iminooxy group, an alkenyloxy group, and among these, an alkoxy group or a substituted alkoxy group is preferable.

In addition, the aforementioned silanol group represents a group of atoms in which a hydroxyl group is directly bound to the aforementioned silicon atom, and is formed when the aforementioned hydrolyzable silyl group is hydrolyzed.

In addition, as the aforementioned polysiloxane (a3), those having, if necessary, an alkyl group such as a methyl group, a phenyl group, can be used, in addition to the aforementioned polysiloxanes, and for example, those in which at least one selected from the group consisting of an aromatic cyclic structure such as a phenyl group, an alkyl group having 1 to 3 carbon atoms, and an alkoxy group having 1 to 3 carbon atoms is directly bound to a silicon atom constituting the polysiloxane (a3) are more preferably used to maintain the good water dispersion stability of the aqueous hybrid resin.

As the aforementioned polysiloxane (a3), for example, those obtained by completely or partially hydrolyzing the silane compound described below can be used.

As the silane compound, for example, organotrialkoxysilanes such as methyltrimethoxysilane, methyltriethoxysilane, methyl tri-n-butoxysilane, ethyltrimethoxysilane, n-propyltrimethoxysilane, iso-butyltrimethoxysilane, cyclohexyltrimethoxysilane, phenyltrimethoxysilane, phenyltriethoxysilane, vinyltrimethoxysilane, 3-(meth)acryloyloxypropyltrimethoxysilane; diorganodialkoxysilanes such as dimethyldimethoxysilane, dimethyldiethoxysilane, dimethyldi-n-butoxysilane, diethyldimethoxysilane, diphenyldimethoxysilane, methylcyclohexyldimethoxysilane, methylphenyldimethoxysilane; various chlorosilanes such as methyltrichlorosilane, ethyltrichlorosilane, phenyltrichlorosilane, vinyltrichlorosilane, 3-(meth)acryloyloxypropyltrichlorosilane, dimethyldichlorosilane, diethyldichlorosilane, diphenyldichlorosilane; a partial hydrolyzed condensate thereof, can be used, and among these, organotrialkoxysilanes or diorganodialkoxysilanes are preferably used. These silane compounds may be used alone or in combination of two or more kinds thereof.

In addition, the aforementioned polysiloxane (a3) is preferably formed by a 2-step reaction process in the process of the preparation of the hybrid resin (A). Specifically, a structure containing the polysiloxane can be formed by reacting a silane compound having a relatively low molecular weight such as phenyltrimethoxysilane with a hydrolyzable group contained in the aforementioned vinyl polymer (a2) to form a polysiloxane structure, and then reacting the reactant with a condensate such as methyltrimethoxysilane, ethyltrimethoxysilane. Thereby, an aqueous hybrid resin composition which is capable of forming a coating film having more excellent elongation with respect to substrates as well as excellent durability or an antifouling property can be obtained.

Next, a method for preparing the aqueous hybrid resin composition used in the present invention will be described.
The method for preparing the aqueous hybrid resin composition of the present invention usually includes a step of preparing a hybrid resin (A) and a step of dispersing the hybrid resin (A) in an aqueous medium.

First, the step of preparing aforementioned hybrid resin (A) will be described.

The aforementioned hybrid resin (A) can be prepared, for example, by the steps of (I) to (III) below.

The aforementioned step (I) is a step of polymerizing the aforementioned vinyl monomers in an organic solvent in the presence of the aforementioned polymerization initiator to obtain a solution of a vinyl polymer (a2) in an organic solvent.

This reaction is preferably carried out, for example, by sequentially or simultaneously feeding the aforementioned vinyl monomers in an organic solvent containing a polymerization initiator, and then performing the reaction under stirring at a temperature in the range of 20 to 120°C for about 0.5 to 24 hours.

In addition, the aforementioned step (II) is a step of reacting a reactive functional group such as a hydrolyzable silyl group contained in the aforementioned vinyl polymer (a2) with a hydrolyzable silyl group or silanol group contained in the silane compound in the solution of the vinyl polymer (a2) in an organic solvent, and performing a hydrolysis condensation reaction between the silane compounds to obtain a solution of a resin (C) in which the vinyl polymer (a2) is bound to the polysiloxane (a3) in an organic solvent.

This reaction is preferably carried out, for example, following the aforementioned step (I), by sequentially or simultaneously feeding the silane compound capable of the aforementioned polysiloxane (a3) in a solution of the aforementioned vinyl polymer (a2) in an organic solvent, and then performing the reaction under stirring at a temperature in the range of 20 to 120°C for about 0.5 to 24 hours.

It is preferable that the aforementioned step (II) further include a 2-step reaction process. Specifically, the process preferably includes a step of reacting a hydrolyzable silyl group or silanol group contained in the aforementioned vinyl polymer (a2) with a silane compound having a relatively low molecular weight such as phenyltrimethoxysilane, and then a step of reacting the reactant with a condensate obtained by preliminarily condensing a methyltrialkoxysilane and an ethyltrialkoxysilane such as methyltrimethoxysilane and ethyltrimethoxysilane. By carrying out two steps as described above to form a structure of the polysiloxane (a3), an aqueous hybrid resin composition which is capable of forming a coating film having more excellent elongation with respect to substrates as well as excellent durability can be obtained.

In addition, the aforementioned step (III) is a step of performing hydrolysis condensation by mixing the aforementioned resin (C) and the aforementioned hydrophilic group-containing polyurethane (a1) to obtain a solution of the hybrid resin (A) in an organic solvent, in which the aforementioned vinyl polymer (a2) is bound to the hydrophilic group-containing polyurethane (a1) through the polysiloxane (a3).

This reaction is preferably carried out, for example, by, subsequent to the aforementioned step (II), sequentially or simultaneously feeding the hydrophilic group-containing polyurethane (a1) obtained by reacting a polyol including the aforementioned hydrophilic group-containing polyol with a polyisocyanate in the solution of the resin (C) in an organic solvent, and then performing the reaction under stirring at a temperature in the range of 20 to 120°C for about 0.5 to 24 hours.

The solution of the hybrid resin (A) in an organic solvent obtained by the aforementioned steps (I) to (III) is preferably made aqueous by the following step (IV).

The step (IV) is, for example, a step in which, subsequent to the aforementioned step (III), a hydrophilic group contained in the aforementioned hybrid resin (A) is neutralized and the neutralized product is dispersed in an aqueous medium.

The neutralization of a hydrophilic group is not necessarily carried out in all cases, but it is preferable to carry out the neutralization from the viewpoint of improving the water dispersion stability of the hybrid resin (A). Particularly, in the case where the hydrophilic group is an anionic group such as a carboxylic group, a sulfonic acid group, it is preferable to neutralize all or a part of the hydrophilic group with a basic compound to give a carboxylate group or a sulfonate group to improve the water dispersion stability.

The aforementioned neutralization can be carried out, for example, by sequentially or simultaneously feeding the basic compound into a solution of the aforementioned hybrid resin (A) in an organic solvent, and stirring.

After the neutralization, the aqueous hybrid resin composition of the present invention can be prepared by feeding an aqueous medium into a solution of the neutralized product of the hybrid resin (A) in an organic solvent, and then removing the organic solvent.

The removal of the organic solvent can be carried out, for example, by distillation.

In addition, examples of the aqueous medium include water, an organic solvent miscible with water, and a mixture thereof. Examples of the organic solvent miscible with water include alcohols such as methanol, ethanol, n-propanol, isopropanol; ketones such as acetone, methyl ethyl ketone; polyalkylene glycols such as ethylene glycol, diethylene glycol, propylene glycol; alkyl ethers such as polyalkylene glycols; lactams such as N-methyl-2-pyrrolidone, etc. In the present invention, water alone may be used, a mixture of water and an organic solvent miscible with water may be used, or an organic solvent miscible with water alone may be used. In view of stability or load on the environment, water alone, or a mixture of water and an organic solvent miscible with water is preferable, and water alone is particularly preferable.

The aqueous hybrid resin composition of the present invention preferably has 20 to 70% by weight of non-volatile components, and has more preferably 30 to 60% by weight of non-volatile components, from the viewpoint of the inhibition of the drastic increase in the viscosities at a time of preparation as well as the improvement of productivity

of the aqueous hybrid resin composition, ease of application, dryness.

In the aqueous hybrid resin composition of the present invention, if necessary, a curing agent may be used in combination.

As the aforementioned curing agent, a compound having a functional group which reacts with a hydrophilic group or silanol group contained in the aforementioned hybrid resin (A) can be used.

Specific examples of the curing agent include a compound having a silanol group and/or hydrolyzable silyl group, a polyepoxy compound, a polyoxazoline compound, a polyisocyanate. Particularly, in the case where those having a carboxylic group or a carboxylate group are used as the hybrid resin, a combined use of a compound having an epoxy group and a silanol group and/or hydrolyzable silyl group, a polyepoxy compound, and a polyoxazoline compound is preferable.

Examples of the aforementioned compound having a silanol group and/or hydrolyzable silyl group include, in addition to the same compounds as the silane compounds exemplified to be possibly used in the preparation of the hybrid resin, 3-glycidoxypropyltrimethoxysilane, 3-glycidoxypropylmethyldimethoxysilane, 3-glycidoxypropyltriethoxysilane, 3-glycidoxypropylmethyldiethoxysilane, β-(3,4-epoxycyclohexyl)ethyltrimethoxysilane, or a hydrolysis condensation product thereof.

Examples of the aforementioned polyepoxy compound include polyglycidyl ethers having a structure derived from an aliphatic or alicyclic polyol, such as ethylene glycol, hexanediol, neopentyl glycol, trimethylolpropane, pentaerythritol, sorbitol, hydrogenated bisphenol A; polyglycidyl ethers of aromatic diols, such as bisphenol A, bisphenol S, bisphenol F; polyglycidyl ethers of polyether polyols, such as polyethylene glycol, polypropylene glycol, polytetramethylene glycol; polyglycidyl ethers of tris(2-hydroxyethyl)isocyanurate; polyglycidyl esters of aliphatic or aromatic polycarboxylic acids, such as adipic acid, butanetetracarboxylic acid, phthalic acid, terephthalic acid; bisepoxides of hydrocarbon-based dienes such as cyclooctadiene, vinyl cyclohexene; alicyclic polyepoxy compounds such as bis(3,4-epoxycyclohexyl methyl) adipate, 3,4-epoxycyclohexyl methyl-3,4-epoxycyclohexylylcarboxylate; etc.

As the aforementioned polyoxazoline compound, for example, 2,2'-p-phenylene-bis(1,3-oxazoline), 2.2'-tetramethylene-bis(1,3-oxazoline), 2,2'-octamethylene-bis(2-oxazoline), 2-isopropenyl-1,3-oxazoline, or a polymer thereof, can be used.

As the aforementioned polyisocyanate, for example, aromatic diisocyanates such as tolylene diisocyanate, diphenyl methane-4,4'-diisocyanate; aralkyl diisocyanates such as metaxylylene diisocyanate, α,α,α',α'-tetramethylmetaxylylene diisocyanate, hexamethylene diisocyanate, lysine diisocyanate, 1,3-bisisocyanatomethylcyclohexane, 2-methyl-1,3-diisocyanatocyclohexane, 2-methyl-1,5-diisocyanatocyclohexane, isophorone diisocyanate, can be used.

In addition, as the aforementioned polyisocyanate, various prepolymers having an isocyanate group, prepolymers having an isocyanurate ring, polyisocyanates having a biuret structure, or vinyl-based monomers having an isocyanate group can be used.

The isocyanate group contained in the polyisocyanate as a curing agent may be blocked with a conventionally known blocking agent such as methanol, if necessary.

The aforementioned curing agent is preferably used, for example, at an amount in the range of 0.1 to 50 parts by weight in terms of a solid, more preferably in the range of 0.5 to 30 parts by weight, and particularly preferably 1 to 20 parts by weight, relative to 100 parts by weight of the hybrid resin (A).

Further, in the case where the aforementioned hybrid resin (A) contains a carboxylic group as the hydrophilic group, the aforementioned curing agent has preferably the reactive functional groups such as an epoxy group, a cyclocarbonate group, a hydroxyl group, an oxazoline group, a carbodiimide group, a hydrazino group, contained in the curing agent at the equivalents in the range of 0.2 to 5.0 equivalents, more preferably in the range of 0.5 to 3.0 equivalents, and particularly preferably in the range of 0.7 to 2.0 equivalents, relative to 1 equivalent of the carboxylic groups in the aforementioned hybrid resin (A).

Further, the aqueous hybrid resin composition of the present invention can contain a curing catalyst, if desired.

As the curing catalyst, for example, lithium hydroxide, sodium hydroxide, potassium hydroxide, sodium methylate, tetraisopropyl titanate, tetra-n-butyl titanate, tin octoate, lead octoate, cobalt octoate, zinc octoate, calcium octoate, zinc naphthenate, cobalt naphthenate, di-n-butyltin diacetate, di-n-butyltin dioctoate, di-n-butyltin dilaurate, di-n-butyltin malate, p-toluenesulfonic acid, trichloroacetic acid, phosphoric acid, monoalkylphosphoric acid, dialkylphosphoric acid, monoalkylphosphorous acid, dialkylphosphorous acid, can be used.

The aqueous hybrid resin composition of the present invention can contain a thermosetting resin, if desired. Examples of the aforementioned thermosetting resin include a vinyl-based resin, a polyester resin, a polyurethane resin, an epoxy resin, an epoxyester resin, an acryl resin, a phenol resin, a petroleum resin, a ketone resin, a silicon resin, or a modified resin thereof.

As the aqueous hybrid resin composition of the present invention, various inorganic particles such as clay minerals, metals, metal oxides, glass, can be used. Examples of the kinds of metal include gold, silver, copper, platinum, titanium, zinc, nickel, aluminum, iron, silicon, germanium, antimony, a metal oxide thereof.

In the aqueous hybrid resin composition of the present invention, various additives such as a photocatalytic

compound, an inorganic pigment, an organic pigment, an extender pigment, a wax, a surfactant, a stabilizer, a fluidity adjusting agent, a dye, a level agent, a rheology controlling agent, an ultraviolet absorbent, an antioxidant, a plasticizer, can be used, if desired.

The photocatalytic compound is a compound which oxidatively decomposes an organic material by light irradiation, and has recently attracted attention in the fields in which a self-cleaning function is required, including construction exterior materials. In addition, the photocatalytic compound has also attracted attention as an environmentally useful material since it can decompose substances such as hazardous gases such as $NO_x$ in air, environmental hormones in water, and can also exhibit air purifying functions, water purifying functions, air freshening functions, or antimicrobial functions.

As the photocatalytic compound, for example, titanium oxide, zinc oxide, iron oxide, zirconium oxide, tungsten oxide, chromium oxide, molybdenum oxide, germanium oxide, copper oxide, vanadium oxide, manganese oxide, nickel oxide, ruthenium oxide, can be used. Specifically, for example, "ST-01" (titanium oxide manufactured by Ishihara Sangyo Kaisha, Ltd., average particle size = 7 nm), "ST-21" (titanium oxide manufactured by Ishihara Sangyo Kaisha, Ltd., average particle size = 20 nm), "AMT-100" (titanium oxide manufactured by Tayca Corporation, average particle size = 6 nm), "TKD-701" (titanium oxide dispersion manufactured by Tayca Corporation, average particle size = 6 nm), "TKD-702" (titanium oxide dispersion manufactured by Tayca Corporation, average particle size = 6 nm), "STS-21" (titanium oxide dispersion in water manufactured by Ishihara Sangyo Kaisha, Ltd., average particle size = 20 nm), "TKS-203" (titanium oxide dispersion in water manufactured by Tayca Corporation, average particle size = 6 nm), can be used. Among these, titanium oxide or zinc oxide which is chemically stable and non-toxic, and has high photocatalytic activity is preferably used.

The aforementioned photocatalytic compound is preferably in a particle shape, and the average particle size usually ranges from 3 to 100 nm, preferably ranges from 3 to 50 nm, and particularly preferably ranges from 4 to 30 nm.

The aforementioned photocatalytic compound may be used as it is in the powders in the particulate form, but those in the sol form in which the photocatalytic compound has been preliminarily dispersed in an organic solvent or an aqueous medium are preferably used from the viewpoint of offering good dispersibility.

The photocatalytic compound is preferably at an amount in the range of 0.01 to 20 parts by weight, and more preferably in the range of 0.1 to 10 parts by weight, relative to 100 parts by weight of the hybrid resin (A). By using the photocatalytic compound in the above-described range, the effects of decompositional deterioration by oxide fine particles of the resulting coating film are small, and the self-cleaning function can be exhibited by the hydrophilicity offered to a surface layer section of the coating film.

The aforementioned aqueous hybrid resin composition can be used in various applications such as a coating preparation, an adhesive preparation, since it can form a coating film having excellent elongation with respect to substrates. Among these, the aqueous hybrid resin composition of the present invention is preferably used for a coating preparation, and more preferably used for a coating preparation for forming a top layer or a coating preparation for forming a primer layer, since it can form a coating film having excellent elongation with respect to substrates as well as excellent durability and weather resistance.

Examples of the aforementioned substrate which is capable of forming a coating film by applying the coating preparation include a metal substrate, a plastic substrate, a glass substrate, paper, a wood substrate, a fibrous substrate.

In addition, the coating preparation of the present invention can be used, for example, to coat the surface of various metal substrates which constitute construction members such as outer walls, roofs, civil engineering members such as guard rails, sound-proof walls, water supply grooves, domestic electrical appliances, industrial machines, automobile parts, etc. since it can form a coating film having corrosion resistance at a level allowing the prevention of rust generation or the prevention of the peeling or swelling of the coating film caused by the rust on the surface of the substrate, in addition to the durability or weather resistance or the elongation with respect to substrates as described above. Particularly, the coating preparation in which the hydrophilic group-containing polyurethane (a1) constituting the aforementioned hybrid resin (A) is obtained by reacting a polyol including a polyether polyol and a hydrophilic group-containing polyol with a polyisocyanate, can be used only for a coating preparation for a metal substrate since it has excellent close adhesiveness to a metal substrate and elongation with respect to substrates, and particularly, it can be preferably used for a surface treatment agent for a steel plate, which can replace a conventional chromate treatment. In addition, the coating preparation for a metal substrate may form a coating film by being directly applied on the surface of a metal substrate and dried, or may be used for forming a primer layer between the metal substrate and the top layer. As the aforementioned metal substrate, for example, plated steel plates such as a zinc plated steel plate, an aluminum-zinc alloy steel plate, an aluminum plate, an aluminum alloy plate, an electric steel plate, a copper plate, a stainless steel plate, can be used.

In addition, among the coating preparations of the present invention, a coating preparation in which the hydrophilic group-containing polyurethane (a1) constituting the aforementioned hybrid resin (A) contained in coating preparation is obtained by reacting a polyol including a polycarbonate polyol and a hydrophilic group-containing polyol with a polyisocyanate, has excellent close adhesiveness to various plastic substrates while not adversely affecting the aforementioned durability or weather resistance, and the elongation with respect to substrates. Particularly, the coating preparation can be suitably used as a coating preparation for coating the surface of a plastic substrate since it has highly excellent close adhesiveness even to substrates such as a polymethyl methacrylate resin, a polystyrene resin, which are generally known as a hardly adhesive substrate.
As the aforementioned plastic substrate, a plastic substrate selected from the group consisting of a polycarbonate substrate, a polyester substrate, an acrylonitrile-butadiene-styrene substrate, a polyacryl substrate, a polystyrene substrate, a polyurethane substrate, an epoxy resin substrate, a polyvinyl chloride-based substrate, and a polyamide-based substrate, each employed for plastic molded products such as mobile phones, domestic electrical appliances, automobile interior or exterior materials, OA instruments, can be generally used.

In addition, the coating preparation of the present invention can be used, for example, to coat the surface of a transparent plastic substrate since it can form a relatively transparent coating film. Here, as the transparent plastic substrate, a substrate containing a polymethyl methacrylate resin (PMMA resin), a polycarbonate resin, can be used. This transparent plastic substrate is typically called organic glass, has characteristics that it is light and not easily cracked, as compared with common inorganic glass, and its application in houses or automobile glass windows as a replacement of inorganic glass has been recently investigated. In accordance with the coating preparation of the present invention, excellent weather resistance or durability, an antifouling property, can be provided to the organic glass, while not adversely affecting the transparency of the organic glass used for glass windows of houses.

Various substrates as described above may be preliminarily coated, but the coating preparation of the present invention can be used without problems even when it is used for a substrate which is not preliminarily subjected to surface treatment such as coating since it has excellent close adhesiveness to a plastic substrate.

In addition, the aforementioned substrates may each be in a plate shape, a spherical shape, a film shape, or a sheet shape. In addition, the coating preparation of the present invention can be suitably used for a substrate in the film shape or the sheet shape which can be easily deformed or stretched by the effects of an external force, a temperature, or a substrate having fine unevenness on the surface, particularly in view of its excellent elongation with respect to substrates.

The coating preparation of the present invention can form a coating film having excellent durability, weather resistance, and elongation with respect to substrates, for example, by being directly applied on the surface of the substrate, dried, and then cured.

Examples of the method for applying the aforementioned coating preparation on the substrate include a spraying method, a curtain coater method, a flow coater method, a roll coater method, a brushing method, a dipping method.

The method for performing drying and curing may be a method for curing at room temperature for about 1 day to 10 days, and it is preferably a method for heating at a temperature ranging from 50 to 250°C for about 1 to 600 seconds from the viewpoint of rapidly processing curing. In addition, in the case of using a plastic substrate which is susceptible to deformation or decoloration at a relatively high temperature, it is preferable to carry out the curing at a relatively low temperature ranging from about 30 to 100°C.

The film thickness of a coating film formed by using the coating preparation of the present invention can be suitably adjusted according to the applications in which a substrate is used, but it is preferable that is usually range from about 0.5 $\mu$m to 20 $\mu$m.

In addition, in the case of obtaining a laminate having a coating film further containing a coating preparation for forming a top layer on the surface of the coating film formed by using the coating preparation of the present invention, conventionally known acryl resin-based paints, polyester resin-based paints, alkyd resin-based paints, epoxy resin-based paints, fatty acid-modified epoxy resin-based paints, silicone resin-based paints, polyurethane resin-based paints, can be used as the coating preparation for forming a top layer,.

As described above, the laminate in which the substrate and the coating film formed by using the coating preparation of the present invention are layered can be used, for example, for automobile parts such as automobile interior and exterior materials, as well as parts of various domestic electrical appliances, products of construction materials, in addition to mobile phones, domestic electrical appliances, or OA instruments.

EXAMPLES

Next, the present invention will be described in greater detail with Examples and Comparative Examples.

Synthesis Example 1

Preparation example of condensate (a3'-1) of methyltrimethoxysilane

Methyltrimethoxysilane (MTMS), in an amount of 1,421 parts by weight, was placed in a reactor equipped with a stirrer, a thermometer, a dropping funnel, a reflux condenser and a nitrogen gas inlet tube, and then heated to 60°C.

Subsequently, a mixture of 0.17 parts by weight of "A-3" (iso-propyl acid phosphate, manufactured by Sakai Chemical Industry Co., Ltd.) and 207 parts by weight of deionized water was added dropwise to the aforementioned reactor over 5 minutes. Subsequently, the mixture was stirred for 4 hours at 80°C to carry out a hydrolysis condensation reaction.

The condensate obtained by the aforementioned hydrolysis condensation reaction was distilled at 40 to 60°C under reduced pressure ranging from 300 to 10 mmHg ("under reduced pressure" means the condition in which the reduced pressure condition at the time of starting the distillation of methanol is 30 mmHg, and reduction of pressure is carried out until the final pressure is 10 mmHg. Hereinafter, the same meaning as described above is applied.), and the methanol and water produced in the aforementioned reaction process were removed by distillation. Thereby, 1,000 parts by weight of a liquid mixture (active ingredient = 70% by weight), containing a condensate (a3'-1) of methyltrimethoxysilane having a number average molecular weight of 1,000 was obtained.

The aforementioned active ingredient was calculated by a value obtained by dividing a theoretical yield (parts by weight) in the case of completely condensation-reacting all methoxy groups of a silane monomer such as methyltrimethoxysilane (MTMS) by a practical yield (parts by weight) after the condensation reaction ((a theoretical yield (parts by weight) in the case of completely condensation-reacting all methoxy groups of the silane monomer)/(a practical yield (parts by weight) after the condensation reaction)).

Synthesis Example 2

Preparation example of condensate (a3'-2) of ethyltrimethoxysilane

Ethyltrimethoxysilane (ETMS), in an amount of 1,296 parts by weight, was placed in a reactor equipped with a stirrer, a thermometer, a dropping funnel, a reflux condenser and a nitrogen gas inlet tube, and then heated to 60°C.

Subsequently, a mixture of 0.14 parts by weight of "A-3" (iso-propyl acid phosphate, manufactured by Sakai Chemical Industry Co., Ltd.) and 171 parts by weight of deionized water was added dropwise to the aforementioned reactor over 5 minutes. Subsequently, the mixture was stirred for 4 hours at 80°C to carry out a hydrolysis condensation reaction.

The condensate obtained by the aforementioned hydrolysis condensation reaction was distilled at 40 to 60°C under reduced pressure ranging from 300 to 10 mmHg, and the methanol and water produced in the aforementioned reaction process were removed by distillation. Thereby, 1,000 parts by weight of a liquid mixture (active ingredient = 70% by weight) containing a condensate (a3'-2) of ethyltrimethoxysilane having a number average molecular weight of 1,100 was obtained.

Table 1

| Table 1 | | Synthesis Example 1 | Synthesis Example 2 |
|---|---|---|---|
| Abbreviation | | a3'-1 | a3'-2 |
| Silane monomer (parts by weight) | MTMS | 1,421 | - |
| | ETMS | - | 1,296 |
| Active ingredient (% by weight) | | 70.0 | 70.0 |

Table 1

The abbreviations shown in Table 1 are described below.
"MTMS" = methyltrimethoxysilane
"ETMS" = ethyltrimethoxysilane

Synthesis Example 3

Preparation example of hybrid resin intermediate-containing liquid (C-1)

125 parts by weight of propylene glycol monopropyl ether (PnP), 168 parts by weight of phenyltrimethoxysilane (PTMS) and 102 parts by weight of dimethyldimethoxysilane (DMDMS) were placed in a reactor equipped with a stirrer, a thermometer, a dropping funnel, a reflux condenser and a nitrogen gas inlet tube, and then heated to 80°C.

Subsequently, a mixture of 38 parts by weight of methyl methacrylate (MMA), 24 parts by weight of butyl

methacrylate (BMA), 36 parts by weight of butyl acrylate (BA), 24 parts by weight of acrylic acid (AA), 4 parts by weight of 3-methacryloxypropyl trimethoxysilane (MPTS), 54 parts by weight of PnP and 6 parts by weight of tert-butyl peroxy-2-ethylhexanoate (TBPEH) was added dropwise to the aforementioned reactor over 4 hours at the same temperature as described above. Subsequently, the mixture was further reacted for 2 hours at the same temperature as described above. Thereby, a solution (c1) of an acryl polymer with carboxyl groups and hydrolyzable silyl groups, having a number average molecular weight of 10,200, dissolved in an organic solvent was obtained.

Subsequently, a mixture of 2.7 parts by weight of "A-3" (iso-propyl acid phosphate, manufactured by Sakai Chemical Industry Co., Ltd.) and 76 parts by weight of deionized water was added dropwise to the aforementioned reactor over 5 minutes. Subsequently, the mixture was further stirred for one hour at the same temperature as described above to carry out a hydrolysis condensation reaction. Thereby, a hybrid resin intermediate-containing liquid (C'-1) in which the hydrolyzable silyl groups which the acryl polymer in the aforementioned organic solvent solution (c1) had and the silanol groups and the hydrolyzable silyl groups which the polysiloxane derived from the aforementioned PTMS and DMDMS had were bound was obtained.

Subsequently, the aforementioned hybrid resin intermediate-containing liquid (C'-1) and 291 parts by weight of the aforementioned condensate (a3'-1) of methyltrimethoxysilane were mixed, and 49 parts by weight of deionized water was further added thereto. The mixture was stirred for 16 hours at the same temperature as described above to carry out a hydrolysis condensation reaction. Thereby, 1,000 parts by weight of a hybrid resin intermediate-containing liquid (C-1) in which the aforementioned condensate (a3'-1) of methyltrimethoxysilane was further bound to the aforementioned hybrid resin intermediate-containing liquid (C'-1) was obtained.

Synthesis Example 4

Preparation example of hybrid resin intermediate-containing liquid (C-2)

121 parts by weight of PnP, 267 parts by weight of PTMS and 162 parts by weight of DMDMS were placed in a reactor equipped with a stirrer, a thermometer, a dropping funnel, a reflux condenser and a nitrogen gas inlet tube, and then heated to 80°C.

Subsequently, a mixture of 61 parts by weight of MMA, 50 parts by weight of BMA, 7 parts by weight of BA, 4 parts by weight of MPTS, 52 parts by weight of PnP, and 6 parts by weight of TBPEH was added dropwise to the aforementioned reactor over 4 hours at the same temperature as described above. Subsequently, the mixture was further reacted for 2 hours at the same temperature as described above. Thereby, a solution (c2) of an acryl polymer with carboxyl groups and hydrolyzable silyl groups, having a number average molecular weight of 10,300, dissolved in an organic solvent was obtained.

Subsequently, a mixture of 4.3 parts by weight of "A-3" (iso-propyl acid phosphate, manufactured by Sakai Chemical Industry Co., Ltd.) and 121 parts by weight of deionized water was added dropwise to the aforementioned reactor over 5 minutes. Subsequently, the mixture was further stirred for one hour at the same temperature as described above to carry out a hydrolysis condensation reaction. Thereby, 1,000 parts by weight of a hybrid resin-containing liquid (C'-2) in which the hydrolyzable silyl group which the acryl polymer in the aforementioned organic solvent solution (c2) and a polysiloxane derived from the aforementioned PTMS and DMDMS were bound was obtained.

Subsequently, 123 parts by weight of the aforementioned condensate (a3'-1) of methyltrimethoxysilane was added thereto, and 21 parts by weight of deionized water was further added thereto. The mixture was stirred for 16 hours at the same temperature as described above to carry out a hydrolysis condensation reaction. Thereby, a hybrid resin intermediate-containing liquid (C-2) in which the aforementioned condensate (a3'-1) of methyltrimethoxysilane was further bound to the hybrid resin intermediate in the aforementioned liquid (C'-2) was obtained.

Synthesis Example 5

Preparation example of hybrid resin intermediate-containing liquid (C-3)

1,000 parts by weight of a hybrid resin intermediate-containing liquid (C-3) in which the hybrid resin intermediate in the aforementioned liquid (C'-1) and the aforementioned condensate (a3'-2) of ethyltrimethoxysilane were bound was obtained in the same manner as described in Synthesis Example 3, with the exception of using 291 parts by weight of the aforementioned condensate (a3'-2) of ethyltrimethoxysilane instead of 291 parts by weight of the aforementioned condensate (a3'-1) of methyltrimethoxysilane.

Synthesis Example 6

Preparation example of hybrid resin intermediate-containing liquid (C-4)

129 parts by weight of PnP, 283 parts by weight of PTMS and 171 parts by weight of DMDMS were placed in a reactor equipped with a stirrer, a thermometer, a dropping funnel, a reflux condenser and a nitrogen gas inlet tube, and then heated to 80°C.

Subsequently, a mixture of 21 parts by weight of MMA, 13 parts by weight of BMA, 20 parts by weight of BA, 13 parts by weight of AA, 2.1 parts by weight of MPTS, 58 parts by weight of PnP, and 3.5 parts by weight of TBPEH was added dropwise to the aforementioned reactor over 4 hours at the same temperature as described above. Subsequently, the mixture was further reacted for 2 hours at the same temperature as described above. Thereby, a solution (c4) of an acryl polymer with carboxyl groups and hydrolyzable silyl groups, having a number average molecular weight of 9,900, dissolved in an organic solvent was obtained.

Subsequently, a mixture of 4.6 parts by weight of "A-3" (iso-propyl acid phosphate, manufactured by Sakai Chemical Industry Co., Ltd.) and 129 parts by weight of deionized water was added dropwise to the aforementioned reactor over 5 minutes. Subsequently, the mixture was further stirred for one hour at the same temperature as described above to carry out a hydrolysis condensation reaction. Thereby, 1,000 parts by weight of a hybrid resin-containing liquid (C'-4) in which the hydrolyzable silyl group which the acryl polymer in the aforementioned organic solvent solution (c4) had and a polysiloxane derived from the aforementioned PTMS and DMDMS were bound was obtained.

Subsequently, the aforementioned hybrid resin intermediate (C'-4) and 130 parts by weight of the aforementioned condensate (a3'-1) of methyltrimethoxysilane were mixed, and 22 parts by weight of deionized water was further added thereto. The mixture was stirred for 16 hours at the same temperature as described above to carry out a hydrolysis condensation reaction. Thereby, a hybrid resin intermediate-containing liquid (C-4) in which the aforementioned condensate (a3'-1) of methyltrimethoxysilane was further bound to the aforementioned hybrid resin intermediate (C'-4) was obtained.

Example 1

Preparation of aqueous hybrid resin composition (I)

158 parts by weight of a polytetramethylene glycol having a number average molecular weight of 2,000 (PTMG-2000, manufactured by Mitsubishi Chemical Corporation) and 66 parts by weight of isophorone diisocyanate (IPDI) were placed in a reactor equipped with a stirrer, a thermometer, a dropping funnel, a reflux condenser and a nitrogen gas inlet tube, and then heated to 100°C. The mixture was reacted for one hour at the same temperature as described above.

Subsequently, the temperature was reduced to 80°C and 13 parts by weight of dimethylolpropionic acid (DMPA), 5 parts by weight of neopentyl glycol (NPG), and 121 parts by weight of methyl ethyl ketone (MEK) were added to the aforementioned reactor. Subsequently, the mixture was further reacted for 5 hours at 80°C.

Subsequently, the temperature was reduced to 50°C and 30 parts by weight of 3-aminopropyltriethoxysilane (APTES) and 285 parts by weight of isopropyl alcohol (IPA) were added to the reactor to react the mixture. Thereby, a solution (i) of a polyurethane with a number average molecular weight of 7,400 having carboxyl groups and hydrolyzable silyl groups dissolved in an organic solvent was produced.

Subsequently, the total amount of the aforementioned organic-solvent solution (i) of polyurethane and 158 parts by weight of the aforementioned hybrid resin intermediate-containing liquid (C-1) were mixed and stirred for one hour at 80°C to carry out a hydrolysis condensation reaction. Thereby, a liquid (I') of a hybrid resin in which a hydrolyzable silyl group which the polyurethane in the aforementioned organic-solvent solution (i) had and a hydrolyzable silyl group which the hybrid resin intermediate in the aforementioned liquid (C-1) had were bound was obtained.

Subsequently, the aforementioned hybrid resin-containing liquid (I') and 10 parts by weight of triethylamine (TEA) were mixed. Thereby, a neutralized product in which the carboxyl groups in the aforementioned hybrid resin were neutralized was obtained. Subsequently, a mixture of the aforementioned neutralized product and 610 parts by weight of deionized water was distilled for 4 hours under reduced pressure ranging from 300 to 10 mmHg at 40 to 60°C, and the produced methanol, organic solvent and water were removed. Thereby, 1,000 parts by weight of an aqueous hybrid resin composition (I) having 35.0% by weight of non-volatile materials was obtained.
The weight ratios of "polysiloxane structure/hybrid resin" and "vinyl polymer structure/hydrophilic group-containing polyurethane structure" of the hybrid resin in the obtained aqueous hybrid resin composition are shown in Table 2.

Example 2

Preparation of aqueous hybrid resin composition (II)

142 parts by weight of a polytetramethylene glycol having a number average molecular weight of 2,000 (PTMG-2000, manufactured by Mitsubishi Chemical Corporation) and 60 parts by weight of IPDI were placed in a reactor equipped with a stirrer, a thermometer, a dropping funnel, a reflux condenser and a nitrogen gas inlet tube, and then heated to 100°C. The mixture was reacted for one hour at the same temperature as described above.

Subsequently, the temperature was reduced to 80°C and 12 parts by weight of DMPA, 4 parts by weight of NPG, and 110 parts by weight of MEK were added to the aforementioned reactor. Subsequently, the mixture was further reacted for 5 hours at 80°C.

Subsequently, the temperature was reduced to 50°C and 27 parts by weight of APTES and 258 parts by weight of IPA were added to the reactor to react the mixture. Thereby, a solution (ii) of a polyurethane with a number average molecular weight of 7,400 having carboxyl groups and hydrolyzable silyl groups dissolved in an organic solvent was produced.

Subsequently, the total amount of the aforementioned organic-solvent solution (ii) of polyurethane and 209 parts by weight of the aforementioned hybrid resin intermediate-containing liquid (C-1) were mixed and stirred for one hour at 80°C to carry out a hydrolysis condensation reaction. Thereby, a liquid (II') containing a hybrid resin in which a hydrolyzable silyl group which the polyurethane in the aforementioned organic-solvent solution (ii) had and a hydrolyzable silyl group which the hybrid resin intermediate in the aforementioned liquid (C-1) had were bound was obtained.

Subsequently, the aforementioned hybrid resin-containing liquid (II') and 13 parts by weight of TEA were mixed. Thereby, a neutralized product in which the carboxyl groups in the aforementioned hybrid resin were neutralized was obtained. Subsequently, a mixture of the aforementioned neutralized product and 610 parts by weight of deionized water was distilled under the same conditions as described in Example 1. Thereby, 1,000 parts by weight of an aqueous hybrid resin composition (II) having 35.0% by weight of non-volatile materials was obtained.

Example 3

Preparation of aqueous hybrid resin composition (III)

1,000 parts by weight of an aqueous hybrid resin composition (III) having 35.1% by weight of non-volatile materials was obtained in the same manner as described in Example 2, with the exception that 216 parts by weight of the aforementioned hybrid resin intermediate (C-2) was used instead of 209 parts by weight of the aforementioned hybrid resin intermediate (C-1), and 7 parts by weight of TEA was used instead of 13 parts by weight of TEA.

Example 4

Preparation of aqueous hybrid resin composition (IV)

122 parts by weight of a polytetramethylene glycol having a number average molecular weight of 2,000 (PTMG-2000, manufactured by Mitsubishi Chemical Corporation) and 51 parts by weight of IPDI were placed in a reactor equipped with a stirrer, a thermometer, a dropping funnel, a reflux condenser and a nitrogen gas inlet tube, and then heated to 100°C. The mixture was reacted for one hour at the same temperature as described above. [0185] Subsequently, the temperature was reduced to 80°C and 10 parts by weight of DMPA, 4 parts by weight of NPG, and 94 parts by weight of MEK were added to the aforementioned reactor. Subsequently, the mixture was further reacted for 5 hours at 80°C.

Subsequently, the temperature was reduced to 50°C and 23 parts by weight of APTES and 221 parts by weight of IPA were added to the reactor to react the mixture. Thereby, a solution (iv) of a polyurethane with a number average molecular weight of 7,500 having carboxyl groups and hydrolyzable silyl groups dissolved in an organic solvent was produced.

Subsequently, the total amount of the aforementioned organic-solvent solution (iv) of polyurethane and 279 parts by weight of the aforementioned hybrid resin intermediate-containing liquid (C-1) were mixed and stirred for one hour at 80°C to carry out a hydrolysis condensation reaction. Thereby, a liquid (IV) containing a hybrid resin in which a hydrolyzable silyl group which the polyurethane in the aforementioned organic-solvent solution (iv) had and a hydrolyzable silyl group which the hybrid resin intermediate in the aforementioned liquid (C-1) had were bound was obtained.

Subsequently, the aforementioned hybrid resin-containing liquid (IV) and 14 parts by weight of TEA were mixed. Thereby, a neutralized product in which the carboxyl groups in the aforementioned hybrid resin were neutralized was obtained. Subsequently, a mixture of the aforementioned neutralized product and 610 parts by weight of deionized water was distilled under the same conditions as described in Example 1. Thereby, 1,000 parts by weight of an aqueous hybrid

resin composition (IV) having 35.0% by weight of non-volatile materials was obtained.

Example 5

Preparation of aqueous hybrid resin composition (V)

123 parts by weight of a polycarbonate polyol with a 1,6-hexanediol skeleton having a number average molecular weight of 2,000 (UH-200, manufactured by Ube Industries, Ltd.) and 50 parts by weight of IPDI were placed in a reactor equipped with a stirrer, a thermometer, a dropping funnel, a reflux condenser and a nitrogen gas inlet tube, and then heated to 100°C. The mixture was reacted for one hour at the same temperature as described above.

Subsequently, the temperature was reduced to 80°C and 10 parts by weight of DMPA, 4 parts by weight of NPG, and 94 parts by weight of MEK were added to the aforementioned reactor. Subsequently, the mixture was further reacted for 5 hours at 80°C.

Subsequently, the temperature was reduced to 50°C and 23 parts by weight of the aforementioned APTES and 221 parts by weight of IPA were added to the reactor to react the mixture. Thereby, an organic-solvent solution (v) of a polyurethane having a number average molecular weight of 7,300 having carboxyl groups and hydrolyzable silyl groups was produced.

Subsequently, the total amount of the aforementioned organic-solvent solution (v) of polyurethane and 279 parts by weight of the aforementioned hybrid resin intermediate-containing liquid (C-1) were mixed and stirred for one hour at 80°C to carry out a hydrolysis condensation reaction. Thereby, a liquid (V') containing a hybrid resin in which a hydrolyzable silyl group which the polyurethane in the aforementioned organic-solvent solution (v) had and a hydrolyzable silyl group which the hybrid resin intermediate in the aforementioned liquid (C-1) had were bound was obtained.

Subsequently, the aforementioned hybrid resin-containing liquid (V') and 14 parts by weight of TEA were mixed. Thereby, a neutralized product in which the carboxyl groups in the aforementioned hybrid resin were neutralized was obtained. Subsequently, a mixture of the aforementioned neutralized product and 610 parts by weight of deionized water was distilled under the same conditions as described in Example 1. Thereby, 1,000 parts by weight of an aqueous hybrid resin composition (V) having 35.0% by weight of non-volatile materials was obtained.

Example 6

Preparation of aqueous hybrid resin composition (VI)

123 parts by weight of a polyester polyol ("polyester polyol obtained by reacting neopentyl glycol, 1,6-hexanediol and adipic acid", hydroxyl group equivalent = 1,000 g/equivalent) and 50 parts by weight of IPDI were placed in a reactor equipped with a stirrer, a thermometer, a dropping funnel, a reflux condenser and a nitrogen gas inlet tube, and then heated to 100°C. The mixture was reacted for one hour at the same temperature as described above.

Subsequently, the temperature was reduced to 80°C and 10 parts by weight of DMPA, 4 parts by weight of NPG, and 94 parts by weight of MEK were added to the aforementioned reactor. Subsequently, the mixture was further reacted for 5 hours at 80°C.

Subsequently, the temperature was reduced to 50°C and 23 parts by weight of APTES and 221 parts by weight of IPA were added to the reactor to react the mixture. Thereby, a solution (vi) of a polyurethane with a number average molecular weight of 7,900 having carboxyl groups and hydrolyzable silyl groups dissolved in an organic solvent was produced.

Subsequently, the total amount of the aforementioned organic-solvent solution (vi) of polyurethane and 279 parts by weight of the aforementioned hybrid resin intermediate-containing liquid (C-1) were mixed and stirred for one hour at 80°C to carry out a hydrolysis condensation reaction. Thereby, a liquid (VI') containing a hybrid resin in which a hydrolyzable silyl group which the polyurethane in the aforementioned organic-solvent solution (vi) had and a hydrolyzable silyl group which the hybrid resin intermediate in the aforementioned liquid (C-1) had were bound was obtained.

Subsequently, the aforementioned hybrid resin-containing liquid (VI') and 14 parts by weight of TEA were mixed. Thereby, a neutralized product in which the carboxyl groups in the aforementioned hybrid resin were neutralized was obtained. Subsequently, a mixture of the aforementioned neutralized product and 610 parts by weight of deionized water was distilled under the same conditions as described in Example 1. Thereby, 1,000 parts by weight of an aqueous hybrid resin composition (VI) having 35.0% by weight of non-volatile materials was obtained.

Example 7

Preparation of aqueous hybrid resin composition (VII)

1,000 parts by weight of an aqueous hybrid resin composition (VII) having 35.1% by weight of non-volatile materials was obtained in the same manner as described in Example 4, with the exception of using 288 parts by weight of the aforementioned hybrid resin intermediate-containing liquid (C-2) instead of 279 parts by weight of the aforementioned hybrid resin intermediate-containing liquid (C-1), and using 6 parts by weight of TEA instead of 14 parts by weight of TEA.

Example 8

Preparation of aqueous hybrid resin composition (VIII)

1,000 parts by weight of an aqueous hybrid resin composition (VIII) having 35.1% by weight of non-volatile materials was obtained in the same manner as described in Example 4, with the exception of using 279 parts by weight of the aforementioned hybrid resin-containing liquid (C-3) instead of 279 parts by weight of the aforementioned hybrid resin intermediate-containing liquid (C-1).

Example 9

Preparation of aqueous hybrid resin composition (IX)

61 parts by weight of a polytetramethylene glycol having a number average molecular weight of 2,000 (PTMG-2000, manufactured by Mitsubishi Chemical Corporation) and 26 parts by weight of IPDI were placed in a reactor equipped with a stirrer, a thermometer, a dropping funnel, a reflux condenser and a nitrogen gas inlet tube, and then heated to 100°C. The mixture was reacted for one hour at the same temperature as described above.

Subsequently, the temperature was reduced to 80°C and 5 parts by weight of DMPA, 2 parts by weight of NPG, and 47 parts by weight of MEK were added to the aforementioned reactor. Subsequently, the mixture was further reacted for 5 hours at 80°C.

Subsequently, the temperature was reduced to 50°C and 12 parts by weight of APTES and 110 parts by weight of IPA were added to the reactor to react the mixture. Thereby, a solution (ix) of a polyurethane with a number average molecular weight of 7,500 having carboxyl groups and hydrolyzable silyl groups dissolved in an organic solvent was obtained.

Subsequently, the total amount of the aforementioned organic-solvent solution (ix) of polyurethane and 489 parts by weight of the aforementioned hybrid resin intermediate-containing liquid (C-1) were mixed and stirred for one hour at 80°C to carry out a hydrolysis condensation reaction. Thereby, a liquid (IX') containing a hybrid resin in which a hydrolyzable silyl group which the polyurethane in the aforementioned organic-solvent solution (ix) had and a hydrolyzable silyl group which the hybrid resin intermediate in the aforementioned liquid (C-1) had were bound was obtained.

Subsequently, the aforementioned hybrid resin-containing liquid (IX') and 16 parts by weight of TEA were mixed. Thereby, a neutralized product in which the carboxyl groups in the aforementioned hybrid resin (II') were neutralized was obtained. Subsequently, a mixture of the aforementioned neutralized product and 560 parts by weight of deionized water was distilled under the same conditions as described in Example 1. Thereby, 1,000 parts by weight of an aqueous hybrid resin composition (IX) having 35.0% by weight of non-volatile materials was obtained.

Example 10

Preparation of aqueous hybrid resin composition (X)

77 parts by weight of a polytetramethylene glycol having a number average molecular weight of 2,000 (PTMG-2000, manufactured by Mitsubishi Chemical Corporation) and 32 parts by weight of IPDI were placed in a reactor equipped with a stirrer, a thermometer, a dropping funnel, a reflux condenser and a nitrogen gas inlet tube, and then heated to 100°C. The mixture was reacted for one hour at the same temperature as described above.

Subsequently, the temperature was reduced to 80°C and 6 parts by weight of DMPA, 2 parts by weight of NPG, and 60 parts by weight of MEK were added to the aforementioned reactor. Subsequently, the mixture was further reacted for 5 hours at 80°C.

Subsequently, the temperature was reduced to 50°C and 15 parts by weight of APTES and 140 parts by weight of IPA were added to the reactor to react the mixture. Thereby, a solution (x) of a polyurethane with a number average

molecular weight of 7,600 having carboxyl groups and hydrolyzable silyl groups dissolved in an organic solvent was produced.

Subsequently, the total amount of the aforementioned organic-solvent solution (x) of polyurethane and 476 parts by weight of the aforementioned hybrid resin intermediate-containing liquid (C-4) were mixed and stirred for one hour at 80°C to carry out a hydrolysis condensation reaction. Thereby, a liquid (X') containing a hybrid resin in which a hydrolyzable silyl group which the polyurethane in the aforementioned organic-solvent solution (x) had and a hydrolyzable silyl group which the hybrid resin intermediate in the aforementioned liquid (C-4) had were bound was obtained.

Subsequently, the aforementioned hybrid resin-containing liquid (X') and 11 parts by weight of TEA were mixed. Thereby, a neutralized product in which the carboxyl groups in the aforementioned hybrid resin were neutralized was obtained. Subsequently, a mixture of the aforementioned neutralized product and 560 parts by weight of deionized water was distilled under the same conditions as described in Example 1. Thereby, an aqueous hybrid resin composition was obtained. Subsequently, 0.9 parts by weight of GPTMS was added to the aforementioned composition. Thereby, 1,000 parts by weight of an aqueous hybrid resin composition (X) having 35.1% by weight of non-volatile materials was obtained.

Comparative Example 1

Preparation of aqueous hybrid resin composition (XI) for comparison

60 parts by weight of PnP, 365 parts by weight of MTMS and 32 parts by weight of DMDMS were placed in a reactor equipped with a stirrer, a thermometer, a dropping funnel, a reflux condenser and a nitrogen gas inlet tube, and then heated to 80°C.

Subsequently, a mixture containing 93 parts by weight of MMA, 53 parts by weight of BA, 27 parts by weight of MPTS, 7 parts by weight of AA, 20 parts by weight of 2-hydroxyethyl methacrylate (2-HEMA), 10 parts by weight of PnP and 10 parts by weight of TBPEH was added dropwise to the aforementioned reactor over 4 hours. Subsequently, the mixture was further reacted for 2 hours at the same temperature as described above. Thereby, a solution (xi) of an acryl polymer with a number average molecular weight of 16,000 having carboxyl groups and hydrolyzable silyl groups dissolved in an organic solvent was produced.

Subsequently, a mixture of 4.6 parts by weight of "A-3" (iso-propyl acid phosphate, manufactured by Sakai Chemical Industry Co., Ltd.) and 154 parts by weight of deionized water was added dropwise to the aforementioned reactor containing the aforementioned organic-solvent solution (xi) of the acryl polymer over 5 minutes. The mixture was further stirred for 10 hours at 80°C to carry out a hydrolysis condensation reaction. Thereby, a liquid (XI') containing a hybrid resin for comparison in which polysiloxanes derived from DMDMS and MTMS were bound to the hydrolyzable silyl group which the acryl polymer in the aforementioned organic-solvent solution (xi) had was obtained.

Subsequently, the aforementioned hybrid resin-containing liquid (XI') for comparison and 21 parts by weight of TEA were mixed. Thereby, a neutralized product in which the carboxyl groups in the aforementioned hybrid resin for comparison were neutralized was obtained. Subsequently, a mixture of the aforementioned neutralized product and 530 parts by weight of deionized water was distilled under the same conditions as described in Example 1. Thereby, 1,000 parts by weight of an aqueous hybrid resin composition (XI) for comparison having 40.3% by weight of non-volatile materials was obtained.

Comparative Example 2

Preparation of aqueous hybrid resin composition (XII) for comparison

36 parts by weight of PnP, 80 parts by weight of IPA, 32 parts by weight of PTMS and 19 parts by weight of DMDMS were placed in a reactor equipped with a stirrer, a thermometer, a dropping funnel, a reflux condenser and a nitrogen gas inlet tube, and then heated to 80°C.

Subsequently, a mixture containing 9 parts by weight of MMA, 86 parts by weight of BMA, 67 parts by weight of BA, 14 parts by weight of MPTS, 16 parts by weight of AA, 14 parts by weight of PnP and 14 parts by weight of TBPEH was added dropwise to the aforementioned reactor over 4 hours. Subsequently, the mixture was further reacted for 2 hours at the same temperature as described above. Thereby, a solution (xii) of an acryl polymer with a number average molecular weight of 13,100 having carboxyl groups and hydrolyzable silyl groups dissolved in an organic solvent was produced.

Subsequently, a mixture of 0.9 parts by weight of "A-3" (iso-propyl acid phosphate, manufactured by Sakai Chemical Industry Co., Ltd.) and 24 parts by weight of deionized water was added dropwise to the aforementioned reactor containing the aforementioned organic-solvent solution (xii) of the acryl polymer over 5 minutes. The mixture was further stirred for 10 hours at 80°C to carry out a hydrolysis condensation reaction. Thereby, a liquid (XII') containing a hybrid resin for comparison in which polysiloxanes derived from DMDMS and PTMS were bound to the hydrolyzable

silyl group which the acryl polymer in the aforementioned organic-solvent solution (xii) had was obtained.

Subsequently, the aforementioned hybrid resin-containing liquid (XII') for comparison and 18 parts by weight of TEA were mixed. Thereby, a neutralized product in which the carboxyl groups in the aforementioned hybrid resin for comparison were neutralized was obtained. Subsequently, a mixture of the aforementioned neutralized product and 124 parts by weight of a condensate (a3'-1) of methyltrimethoxysilane were reacted, followed by mixing with 550 parts by weight of deionized water. The mixture was distilled under the same conditions as described in Example 1. Thereby, 1,000 parts by weight of an aqueous hybrid resin composition (XII) for comparison having 40.0% by weight of non-volatile materials was obtained.

Comparative Example 3

Preparation of aqueous hybrid resin composition (XIII) for comparison

171 parts by weight of a polytetramethylene glycol having a number average molecular weight of 2,000 (PTMG-2000, manufactured by Mitsubishi Chemical Corporation) and 72 parts by weight of IPDI were placed in a reactor equipped with a stirrer, a thermometer, a dropping funnel, a reflux condenser and a nitrogen gas inlet tube, and then heated to 100°C. The mixture was reacted for one hour at the same temperature as described above.

Subsequently, the temperature was reduced to 80°C and 14 parts by weight of DMPA, 5 parts by weight of NPG, and 132 parts by weight of MEK were added to the aforementioned reactor. Subsequently, the mixture was further reacted for 5 hours at 80°C.

Subsequently, the temperature was reduced to 50°C and 33 parts by weight of APTES and 309 parts by weight of IPA were added to the aforementioned reactor to react the mixture. Thereby, a solution (xiii) of a polyurethane with a number average molecular weight of 7,500 having carboxyl groups and hydrolyzable silyl groups dissolved in an organic solvent was produced.

Subsequently, the total amount of the aforementioned organic-solvent solution (xiii) of polyurethane and 112 parts by weight of the aforementioned hybrid resin intermediate-containing liquid (C-1) were mixed and stirred for one hour at 80°C to carry out a hydrolysis condensation reaction. Thereby, a liquid (XIII') of a hybrid resin for comparison in which the polyurethane in the aforementioned organic-solvent solution (xiii) and the hybrid resin intermediate in the aforementioned liquid (C-1) were bound was obtained.

Subsequently, the aforementioned hybrid resin-containing liquid (XIII') and 12 parts by weight of TEA were mixed. Thereby, a neutralized product in which the carboxyl groups in the aforementioned hybrid resin for comparison (XIII') were neutralized was obtained. Subsequently, a mixture of the aforementioned neutralized product and 610 parts by weight of deionized water was distilled under the same condition as described in Example 1. Thereby, 1,000 parts by weight of an aqueous hybrid resin composition (XIII) having 35.0% by weight of non-volatile materials was obtained.

Comparative Example 4

Preparation of aqueous hybrid resin composition (XIV) for comparison

187 parts by weight of a polytetramethylene glycol having a number average molecular weight of 2,000 (PTMG-2000, manufactured by Mitsubishi Chemical Corporation) and 78 parts by weight of IPDI were placed in a reactor equipped with a stirrer, a thermometer, a dropping funnel, a reflux condenser and a nitrogen gas inlet tube, and then heated to 100°C. The mixture was reacted for one hour at the same temperature as described above.

Subsequently, the temperature was reduced to 80°C and 15 parts by weight of DMPA, 6 parts by weight of NPG, and 144 parts by weight of MEK were added to the aforementioned reactor. Subsequently, the mixture was further reacted for 5 hours at 80°C.

Subsequently, the temperature was reduced to 50°C and 36 parts by weight of APTES and 339 parts by weight of IPA were added to the reactor to react the mixture. Thereby, a solution (xiv) of a polyurethane with a number average molecular weight of 7,400 having carboxyl groups and hydrolyzable silyl groups dissolved in an organic solvent was produced.

Subsequently, the total amount of the aforementioned organic-solvent solution (xiv) of polyurethane and 56 parts by weight of the aforementioned hybrid resin intermediate-containing liquid (C-1) were mixed and stirred for one hour at 80°C to carry out a hydrolysis condensation reaction. Thereby, a liquid (XIV') containing a hybrid resin for comparison in which the polyurethane in the aforementioned organic-solvent solution (xiv) and the hybrid resin intermediate in the aforementioned liquid (C-1) were bound was obtained.

Subsequently, the aforementioned hybrid resin-containing liquid (XIV') and 11 parts by weight of TEA were mixed. Thereby, a neutralized product in which the carboxyl groups in the aforementioned hybrid resin for comparison were neutralized was obtained. Subsequently, a mixture of the aforementioned neutralized product and 610 parts by

weight of deionized water was distilled under the same condition as described in Example 1. Thereby, 1,000 parts by weight of an aqueous hybrid resin composition (XIV) having 35.0% by weight of non-volatile materials was obtained.

Comparative Example 5

Preparation example of aqueous hybrid resin composition (XV) for comparison

27 parts by weight of a polytetramethylene glycol having a number average molecular weight of 2,000 (PTMG-2000, manufactured by Mitsubishi Chemical Corporation) and 11 parts by weight of IPDI were placed in a reactor equipped with a stirrer, a thermometer, a dropping funnel, a reflux condenser and a nitrogen gas inlet tube, and then heated to 100°C. The mixture was reacted for one hour at the same temperature as described above.
Subsequently, the temperature was reduced to 80°C and 2 parts by weight of DMPA, 1 part by weight of NPG, and 144 parts by weight of MEK were added to the aforementioned reactor. Subsequently, the mixture was further reacted for 5 hours at 80°C.
Subsequently, the temperature was reduced to 50°C and 5 parts by weight of APTES and 49 parts by weight of IPA were added to the reactor to react the mixture. Thereby, a solution (xiv) of a polyurethane with a number average molecular weight of 7,400 having carboxyl groups and hydrolyzable silyl groups dissolved in an organic solvent was produced.
Subsequently, the total amount of the aforementioned organic-solvent solution (xiv) of polyurethane and 676 parts by weight of the aforementioned hybrid resin intermediate-containing liquid (C-1) were mixed and stirred for one hour at 80°C to carry out a hydrolysis condensation reaction. Thereby, a liquid (XIV') containing a hybrid resin for comparison in which the polyurethane in the aforementioned organic-solvent solution (xiv) and the hybrid resin intermediate in the aforementioned liquid (C-1) were bound was obtained.
Subsequently, the aforementioned hybrid resin-containing liquid (XIV') and 12 parts by weight of TEA were mixed. Thereby, a neutralized product in which the carboxyl groups in the aforementioned hybrid resin for comparison were neutralized was obtained. Subsequently, a mixture of the aforementioned neutralized product and 610 parts by weight of deionized water was distilled under the same condition as described in Example 1. Thereby, 1,000 parts by weight of an aqueous hybrid resin composition (XIV) having 35.0% by weight of non-volatile materials was obtained.

Comparative Example 6

Preparation example of aqueous hybrid resin composition (XVI) for comparison

150 parts by weight of PnP was placed in the same reactor as described in Synthesis Example 1, and then heated to 80°C.
Subsequently, a mixture containing 60 parts by weight of MMA, 45 parts by weight of BMA, 57 parts by weight of BA, 38 parts by weight of AA, 50 parts by weight of PnP and 9 parts by weight of TBPEH was added dropwise to the aforementioned reactor over 4 hours. Subsequently, the mixture was reacted for 2 hours at the same temperature as described above. Thereby, an acryl polymer (xvi-1) with a number average molecular weight of 16,000 having carboxyl groups was obtained.
Separately, 260 parts by weight of a polytetramethylene glycol (PTMG-2000, manufactured by Mitsubishi Chemical Corporation) and 110 parts by weight of IPDI were placed in another reactor which was the same type of the reactor as described in Synthesis Example 1, and then heated to 100°C. The mixture was reacted for one hour at the same temperature as described above.
Subsequently, the temperature was reduced to 80°C and 22 parts by weight of DMPA, 8 parts by weight of NPG, and 400 parts by weight of MEK were added to the aforementioned reactor. Subsequently, the mixture was further reacted for 5 hours at 80°C. Thereby, a polyurethane (xvi-2) with a number average molecular weight of 7,600 having carboxyl groups was obtained.
Subsequently, 109 parts by weight of the aforementioned acryl polymer (xvi-1), 656 parts by weight of the aforementioned polyurethane (xvi-2) and 235 parts by weight of the aforementioned condensate (a3'-1) of methyltrimethoxysilane were mixed. Thereby, 1,000 parts by weight of a coating preparation (XVI) for use on a plastic substrate was obtained.
The storage stability described in Tables 2 to 4 was evaluated by a value "(viscosity over time)/(initial viscosity)" in which a viscosity over time was divided by an initial viscosity after measuring a viscosity of the aforementioned aqueous hybrid resin composition (initial viscosity) and a viscosity (viscosity over time) after the aforementioned aqueous hybrid resin composition was allowed to stand for 30 days under the circumstance of 50°C. If the aforementioned value generally ranges from about 0.5 to 3.0, the compositions can be used as paint.
In addition, the aforementioned "(polysiloxane structure)/(hybrid resin)" and "(vinyl polymer (a2) structure)/(hydrophilic group-containing polyurethane (a1) structure)" were obtained on the basis of a charging ratio of the raw materials used in the preparation for the hybrid resin (A). The weight ratio of the aforementioned "(polysiloxane structure) /(hybrid resin)" was calculated considering the production of by-products such as methanol, ethanol, which could be produced when the polysiloxane structure was formed.

Table 2

| Table 2 | Example 1 | Example 2 | Example 3 | Example 4 | Example 5 |
|---|---|---|---|---|---|
| Abbreviation of aqueous hybrid resin composition | I | II | III | IV | V |
| (Polysiloxane structure)/(Hybrid resin) (weight ratio) | 17/100 | 23/100 | 23/100 | 30/100 | 30/100 |
| (Vinyl polymer (a2) structure)/(Hydrophilic group-containing polyurethane (a1) structure) (weight ratio) | 6/77 | 7/70 | 7/70 | 10/60 | 10/60 |
| Non-volatile materials (% by weight) | 35.0 | 35.0 | 35.1 | 35.0 | 35.0 |
| Storage stability | 1.0 | 1.0 | 1.0 | 1.0 | 1.0 |

Table 3

| Table 3 | Example 6 | Example 7 | Example 8 | Example 9 | Example 10 |
|---|---|---|---|---|---|
| Abbreviation of aqueous hybrid resin composition | VI | VII | VIII | IX | X |
| (Polysiloxane structure)/(Hybrid resin) (weight ratio) | 30/100 | 30/100 | 30/100 | 53/100 | 53/100 |
| (Vinyl polymer (a2) structure)/(Hydrophilic group-containing polyurethane (a1) structure) (weight ratio) | 10/60 | 10/60 | 10/60 | 17/30 | 9/38 |
| Non-volatile materials (% by weigh) | 35.0 | 35.1 | 35.1 | 35.0 | 35.1 |
| Storage stability | 1.0 | 1.0 | 1.0 | 1.1 | 1.1 |

Table 4

| Table 4 | Comparative Example 1 | Comparative Example 2 | Comparative Example 3 | Comparative Example 4 | Comparative Example 5 |
|---|---|---|---|---|---|
| Abbreviation of aqueous hybrid resin composition | XI | XII | XIII | XIV | XV |
| (Polysiloxane structure)/ (Hybrid resin) (weight ratio) | 50/100 | 30/100 | 12/100 | 6/100 | 65/100 |

(continued)

| Table 4 | Comparative Example 1 | Comparative Example 2 | Comparative Example 3 | Comparative Example 4 | Comparative Example 5 |
|---|---|---|---|---|---|
| (Vinyl polymer (a2) structure)/(Hydrophilic group-containing polyurethane (a1) structure) (weight ratio) | 100/0 | 100/0 | 4/84 | 2/92 | 22/13 |
| Non-volatile materials (% by weight) | 40.3 | 40.0 | 35.0 | 35.0 | 35.0 |
| Storage stability | Gelled | 1.0 | 1.0 | 1.0 | 1.7 |

The various physical properties of a coating film formed from each of the aforementioned aqueous hybrid resin compositions (I) to (X) and the aforementioned aqueous hybrid resin compositions for comparison (XI) to (XVI) were evaluated in accordance with the evaluation methods described below.

In addition, the various physical properties of a coating film formed from an aqueous hybrid resin composition obtained by mixing each of the aforementioned aqueous hybrid resin compositions (I) to (X) and the aforementioned aqueous hybrid resin compositions for comparison (XI) to (XVI) with various types of curing agents in the composition ratios described in Tables 5 to 11 were also evaluated in accordance with the evaluation methods described below.

As the aforementioned curing agents, the following curing agents were used.
"GPTMS" = 3-glycidoxypropyltrimethoxysilane
"MS-51" = "MKC SILICATE MS-51" (polymethoxysiloxane with a condensation degree ranging from 2 to 9), manufactured by Mitsubishi Chemical Corporation.
"EX-614B" = "DENACOL EX-614B" (epoxy compound in which epoxy equivalent = 173 g/eq), manufactured by Nagase ChemteX, Corporation.
"WS-500" = "EPOCROSS WS-500" (aqueous solution of 1,3-oxazoline group-containing aqueous resin having an oxazoline group equivalent of 220 g/eq; non-volatile materials = 40% by weight), manufactured by Nippon Shokubai Co., Ltd.
"V-02" = "CARBODILITE V-02" (aqueous solution of a carbodiimide group-containing aqueous resin having a carbodiimide group equivalent of 600 g/eq; non-volatile materials = 40% by weight), manufactured by Nisshinbo Co., Ltd.

Evaluation methods of durability (solvent resistance, acid resistance, and cracking resistance), weather resistance, and adhesiveness of a coating film

Method for preparing test plates

The aforementioned aqueous hybrid resin composition was applied onto a chromate-treated aluminum plate, manufactured by Engineering Test Service Co., Ltd., so that the film thickness was 10 μm. Subsequently, the plate was dried for 5 minutes under the condition of 80°C, followed by further drying for 10 minutes under the condition of 140°C. Thereby, a test plate (1) was obtained in which a coating film was laminated on the aluminum plate.
In addition, the aforementioned aqueous hybrid resin composition was applied onto a zinc (Zn)-iron (Fe)-melted steel plate (non-surface-treated), manufactured by Nippon Test Panel Co., Ltd., so that the dried film thickness was 2 μm. Subsequently, the plate was dried for 5 minutes at 150°C. Thereby, a test plate (2) was obtained in which a coating film was laminated on the aforementioned zinc (Zn)-iron (Fe)-melted steel plate.
In addition, the aforementioned aqueous hybrid resin composition was applied onto a polycarbonate (PC) substrate, manufactured by Engineering Test Service Co., Ltd., so that the dried film thickness was 10 μm. Subsequently, the plate was dried for 20 minutes at 80°C. Thereby, a test plate (3) was obtained in which a coating film was laminated on the aforementioned polycarbonate substrate.

Evaluation method of solvent resistance

A predetermined part of the surface of each of the aforementioned test plates (1) to (3) was rubbed by reciprocating a felt impregnated with methyl ethyl ketone 50 times. The conditions of the coating film before rubbing and after rubbing were confirmed by touching with fingers and visual observation, and were evaluated in accordance with the evaluation criteria described below.

0: Softening and reduction of the gloss were not observed before and after rubbing.
Δ: Softening or reduction of the gloss was slightly observed before and after rubbing.
X: Softening or reduction of the gloss was remarkably observed before and after rubbing.

When the aforementioned aqueous hybrid resin composition was not tightly adhered to the surface of the aforementioned substrate, and thereby, a test plate could not be produced, the evaluation test of solvent resistance was not performed. "-" shown in the Tables indicates that the evaluation test was not performed due to the aforementioned reason.

Evaluation method of acid resistance

The surface of each of the aforementioned test plates (1) to (3) was immersed in an aqueous solution containing 5% by weight of sulfuric acid and was allowed to stand for 24 hours at 25°C. Subsequently, the aforementioned coating film was washed with water, followed by drying. Visual observation of the condition of the surface of the coating film was carried out. Evaluation was carried out in accordance with the evaluation criteria described below.

○: No etching was observed.
Δ: Slight etching was observed.
X: Remarkable etching was observed.

When the aforementioned aqueous hybrid resin composition was not tightly adhered to the surface of the aforementioned substrate, and thereby, a test plate could not be produced, the evaluation test of acid resistance was not carried out. "-" shown in the Tables indicates that the evaluation test was not carried out due to the aforementioned reason.

Evaluation method of cracking resistance

The aforementioned aqueous hybrid resin composition was applied onto a glass plate so that the thickness of the coating film was 10 μm, followed by drying for 5 minutes under the condition of 80°C, and then further drying for 10 minutes under the condition of 140°C. Thereby, a coating film was obtained.

The obtained test plate was subjected to an exposure test for 1,000 hours by means of an ultraviolet fluorescent lamp weather meter (manufactured by Suga Test Instruments Co., Ltd., at the time of light exposure: 30 W/$m^2$, 60°C; at the time of wetting: humidity = 90% or more, 40°C; light exposure/wetting cycle = 4 hours/4 hours). Subsequently, the outer appearance of the coating film on the surface of the aforementioned test plate was evaluated in accordance with the evaluation criteria by means of visual observation.

O: No occurrence of cracking on the surface of the coating film was observed.
Δ: Occurrence of cracking at a part of the surface of the coating film was slightly observed.
X: Occurrence of cracking on the whole of the surface of the coating film was observed.

When the aforementioned aqueous hybrid resin composition was not tightly adhered to the surface of the aforementioned substrate, and thereby, a test plate could not be produced, the evaluation test of cracking resistance was not carried out. "-" shown in the Tables indicates that the evaluation test was not carried out due to the aforementioned reason.

Evaluation method of weather resistance

The aforementioned test plates (1) to (3) were subjected to an exposure test for 1,000 hours by means of an ultraviolet fluorescent lamp weather meter (manufactured by Suga Test Instruments Co., Ltd., at the time of light exposure: 30 W/$m^2$, 60°C; at the time of wetting: humidity = 90% or more, 40°C; light exposure/wetting cycle = 4 hours/4 hours).

The mirror gloss reflectivity of the surface of the coating film of the test plate after the aforementioned exposure test was carried out was measured by means of HG-268 manufactured by Suga Test Instruments Co., Ltd. The gloss retention rate thereof was obtained in accordance with the following equation.

$$\text{Gloss retention rate} = 100 \times (\text{mirror reflectivity of the coating film after exposure test})/(\text{mirror reflectivity of the coating film before exposure test})$$

As the value of the gloss retention rate obtained by the aforementioned equation is larger, the weather resistance is better. The value which is about 80% or more is preferable.
When the aforementioned aqueous hybrid resin composition was not tightly adhered to the surface of the aforementioned substrate, and thereby, a test plate could not be produced, the evaluation test of weather resistance was not carried out. "-" shown in the Tables indicates that the evaluation test was not carried out due to the aforementioned reason.

Evaluation method of adhesiveness

Adhesiveness of the aforementioned test plates (1) and (2) was evaluated in accordance with the JIS K-5400 grid test method. The evaluation criteria is described below.
In addition, the aforementioned aqueous hybrid resin composition was applied on a polycarbonate (PC) substrate, a polyethylene terephthalate (PET) substrate, an acrylonitrile-butadiene-styrene (ABS) substrate, a polymethyl methacrylate (PMMA) substrate, a polystyrene (PS) substrate, a polyvinyl chloride (PVC) substrate, and a 6-nylon (NR) substrate, manufactured by Engineering Test Service Co., Ltd., so that the dried film thickness was 10 μm, followed by drying for 20 minutes at 80°C. Thereby, the test plate in which a coating film was laminated on each of the plastic substrates was prepared.
The adhesiveness of the coating film formed on the surface of the aforementioned test plate with respect to the plastic substrate was evaluated in the same manner as described above in accordance with the JIS K-5400 grid test method.
○○: No separation of the coating film was observed at all.
○: An area of the coating film which was separated was less than 30% of the all grid area.
Δ: An area of the coating film which was separated ranged from 30% to less than 95% of the all grid area.
X: An area of the coating film which was separated was 95% or more of the all grid area.

Evaluation method of elongation with respect to the substrate

The elongation with respect to the substrate of the coating film was evaluated on the basis of the degree of elongation of the coating film.
First, the aforementioned aqueous hybrid resin composition was applied on a substrate formed from a polypropylene film so that the film thickness was 200 μm. The composition was dried for 5 minutes under the condition of 140°C, and further dried for 24 hours under the condition of 25°C. The film separated from the aforementioned substrate was used as a test coating film (10 mm X 70 mm).
The measurement of the degree of elongation of the aforementioned test coating film was carried out by means of an autograph AGS-1kNG manufactured by Shimadzu Corporation (distance between chucks = 20 mm, tension rate = 300 mm/min, and measuring conditions = 22°C and 60% RH), and was evaluated on the basis of an elongation rate with respect to the coating film before the tension test. The aforementioned degree of elongation is preferably about 80% or more from a practical viewpoint.

Evaluation method of corrosion resistance

The aforementioned test plate (2) obtained by applying the aforementioned aqueous hybrid resin composition onto a zinc (Zn)-iron (Fe)-melted steel plate (non-surface-treated), manufactured by Nippon Test Panel Co., Ltd., so that the dried film thickness was 2 μm, and then drying for 5 minutes at 150°C was used. The corrosion resistance was measured in accordance with JIS K-5400 9.1 resistance test for spraying salt water. More particularly, the surface of the coating film of the aforementioned test plate (2) was cut-up with a depth reaching the substrate by means of a cutter knife (cross cut part), and the salt water spraying test was carried out by means of a salt spraying test device manufactured by Suga Test Instruments Co., Ltd. An area at which corrosion occurred after 240 hours was visually measured, and evaluated. The evaluation was separately carried out at the flat surface at which there were no parts cut by means of a cutter knife and at the periphery part of the cross cut part.

Flat part

○○: An area at which corrosion occurred and swelling or separation of the coating film caused by corrosion occurred was less than 5% with respect to all flat part.
○: An area at which corrosion occurred and swelling or separation of the coating film caused by corrosion occurred was 5% or more, but less than 30% with respect to all flat part.
Δ: An area at which corrosion occurred and swelling or separation of the coating film caused by corrosion occurred was 30% or more, but less than 60% with respect to all flat part.
X: An area at which corrosion occurred and swelling or separation of the coating film caused by corrosion occurred was 60% or more with respect to all flat part.

Periphery part of cross cut part

○○: No occurrence of corrosion was observed and no separation of the coating film caused by corrosion was observed at the periphery part of the cross cut part.
○: Occurrence of corrosion was observed, but no separation or no swelling of the coating film caused by corrosion was observed at the periphery part of the cross cut part.
Δ: Occurrence of corrosion was widely observed and separation and swelling of the coating film caused by corrosion were observed at the periphery part of the cross cut part, but no corrosion channels were observed.
X: Occurrence of corrosion was widely observed, separation and swelling of the coating film caused by corrosion were observed, and stain of the coating film caused by corrosion channels was further observed at the periphery part of the cross cut part.

Evaluation method of stain resistance

The aforementioned test coating film was subjected to an exposure test for 3 months in Sakai factory of DIC Corporation in Takaishi city, Osaka, Japan.
The color difference (ΔE) between the unwashed coating film after the exposure test was carried out and the coating film before the exposure test was carried out was evaluated by means of CM-3500d manufactured by Konica Minolta Sensing, Inc. As the aforementioned color difference (ΔE) is smaller, stain resistance is increased.
Table 5

| Table 5 | | | Example | | | | | |
|---|---|---|---|---|---|---|---|---|
| | | | 1 | 2 | 3 | 4 | 5 | 6 |
| Blending composition (parts by weight) | Aqueous hybrid resin composition (I) | | 100 | - | - | - | - | - |
| | Aqueous hybrid resin composition (II) | | - | 100 | - | - | - | - |
| | Aqueous hybrid resin composition (III) | | - | - | 100 | - | - | - |
| | Aqueous hybrid resin composition (IV) | | - | - | - | 100 | - | - |
| | Aqueous hybrid resin composition (V) | | - | - | - | - | 100 | - |
| | Aqueous hybrid resin composition (VI) | | - | - | - | - | - | 100 |
| Evaluation | Solvent resistance | Test plate (1) | ○ | ○ | ○ | ○ | ○ | ○ |

(continued)

| Table 5 | | | Example | | | | | |
|---|---|---|---|---|---|---|---|---|
| | | | 1 | 2 | 3 | 4 | 5 | 6 |
| | | Test plate (2) | ○ | ○ | ○ | ○ | ○ | ○ |
| | | Test plate (3) | ○-Δ | ○ | ○ | ○ | ○ | ○ |
| | Acid resistance | Test plate (1) | ○ | ○ | ○ | ○ | ○ | ○ |
| | | Test plate (2) | ○ | ○ | ○ | ○ | ○ | ○ |
| | | Test plate (3) | ○ | ○ | ○ | ○ | ○ | ○ |
| | Cracking resistance | Test plate (1) | ○ | ○ | ○ | ○ | ○ | ○ |
| | | Test plate (2) | ○ | ○ | ○ | ○ | ○ | ○ |
| | | Test plate (3) | ○ | ○ | ○ | ○ | ○ | ○ |
| | Weather resistance (%) | Test plate (1) | 75 | 80 | 81 | 83 | 85 | 82 |
| | | Test plate (2) | 75 | 81 | 82 | 85 | 85 | 82 |
| | | Test plate (3) | 73 | 75 | 80 | 83 | 88 | 83 |
| | Adhesiveness | Test plate (1) | ○ | ○ | ○ | ○ | ○ | ○ |
| | | Test plate (2) | ○ | ○ | ○ | ○ | ○ | ○ |
| | Adhesiveness with respect to the plastic substrate | PC substrate | ○○ | ○○ | ○○ | ○○ | ○○ | ○○ |
| | | PET substrate | ○○ | ○○ | ○○ | ○○ | ○○ | ○○ |
| | | ABS substrate | ○○ | ○○ | ○○ | ○○ | ○○ | ○○ |
| | | PMMA substrate | Δ | Δ | Δ | Δ | ○○ | ○○ |
| | | PS substrate | Δ | Δ | Δ | Δ | ○○ | ○○ |
| | | PVC substrate | ○ | ○ | ○ | ○ | ○○ | ○○ |
| | | NR substrate | Δ | Δ | Δ | Δ | ○○ | ○○ |
| | Elongation with respect to the substrate (coating film elongation: %) | | 260 | 250 | 240 | 240 | 200 | 200 |
| | Corrosion resistance | Flat part | ○ | ○ | ○ | ○○ | ○○ | ○○ |
| | | Cross cut part | ○ | ○ | ○ | ○○ | ○ | ○ |
| | Stain resistance | | 3.1 | 3.0 | 3.0 | 3.0 | 3.0 | 3.1 |

Table 6

| Table 6 | | | Example | | | | |
|---|---|---|---|---|---|---|---|
| | | | 7 | 8 | 9 | 10 | 11 |
| Blending composition (parts by weight) | Aqueous hybrid resin composition (I) | | - | - | - | - | 100 |
| | Aqueous hybrid resin composition (VII) | | 100 | - | - | - | - |
| | Aqueous hybrid resin composition (VIII) | | - | 100 | - | - | - |
| | Aqueous hybrid resin composition (IX) | | - | - | 100 | - | - |
| | Aqueous hybrid resin composition (X) | | - | - | - | 100 | - |
| | GPTMS | | - | - | - | - | 3.4 |
| Evaluation | Solvent resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Acid resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Cracking resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Weather resistance (%) | Test plate (1) | 81 | 83 | 87 | 87 | 89 |
| | | Test plate (2) | 82 | 84 | 87 | 88 | 90 |
| | | Test plate (3) | 80 | 82 | 85 | 85 | 88 |
| | Adhesiveness | Test plate (1) | ○ | ○ | ○ | ○ | ○ |
| | | Test plate (2) | ○ | ○ | ○ | ○ | ○ |
| | Adhesiveness with respect to the plastic substrate | PC substrate | ○○ | ○○ | ○○ | ○○ | ○○ |
| | | PET substrate | ○○ | ○○ | ○○ | ○○ | ○○ |
| | | ABS substrate | ○○ | ○○ | ○ | ○ | ○○ |
| | | PMMA substrate | Δ | Δ | Δ | Δ | Δ |
| | | PS substrate | Δ | Δ | Δ | Δ | Δ |
| | | PVC substrate | ○ | ○ | ○ | ○ | ○○ |
| | | NR substrate | Δ | Δ | Δ | Δ | Δ |
| | Elongation with respect to the substrate (coating film elongation: %) | | 260 | 240 | 180 | 200 | 130 |
| | Corrosion resistance | Flat part | ○○ | ○○ | ○○ | ○○ | ○○ |
| | | Cross cut part | ○○ | ○○ | ○○ | ○○ | ○ |
| | Stain resistance | | 3.0 | 3.0 | 2.8 | 2.7 | 3.1 |

Table 7

| Table 7 | | | Example | | | | |
|---|---|---|---|---|---|---|---|
| | | | 12 | 13 | 14 | 15 | 16 |
| Blending composition (parts by weight) | Aqueous hybrid resin composition (II) | | 100 | - | - | - | - |
| | Aqueous hybrid resin composition (III) | | - | 100 | - | - | - |
| | Aqueous hybrid resin composition (IV) | | - | - | 100 | - | - |
| | Aqueous hybrid resin composition (V) | | - | - | - | 100 | - |
| | Aqueous hybrid resin composition (VI) | | - | - | - | - | 100 |
| | GPTMS | | 3.8 | 2.1 | 4.0 | 4.0 | 4.0 |
| Evaluation | Solvent resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Acid resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Cracking resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Weather resistance (%) | Test plate (1) | 90 | 90 | 95 | 96 | 94 |
| | | Test plate (2) | 90 | 91 | 96 | 96 | 94 |
| | | Test plate (3) | 88 | 89 | 94 | 97 | 95 |
| | Adhesiveness | Test plate (1) | ○ | ○ | ○ | ○ | ○ |
| | | Test plate (2) | ○ | ○ | ○ | ○ | ○ |
| | Adhesiveness with respect to the plastic substrate | PC substrate | ○○ | ○○ | ○○ | ○○ | ○○ |
| | | PET substrate | ○○ | ○○ | ○○ | ○○ | ○○ |
| | | ABS substrate | ○○ | ○○ | ○○ | ○○ | ○○ |
| | | PMMA substrate | Δ | Δ | Δ | ○○ | ○○ |
| | | PS substrate | Δ | Δ | Δ | ○○ | ○○ |
| | | PVC substrate | ○○ | ○○ | ○○ | ○○ | ○○ |
| | | NR substrate | Δ | Δ | Δ | ○○ | ○○ |
| | Elongation with respect to the substrate (coating film elongation: %) | | 150 | 150 | 180 | 110 | 120 |
| | Corrosion resistance | Flat part | ○○ | ○○ | ○○ | ○○ | ○○ |
| | | Cross cut part | ○○ | ○○ | ○○ | ○○ | ○○ |
| | Stain resistance | | 3.2 | 3.1 | 3.0 | 3.1 | 3.0 |

Table 8

| Table 8 | | | Example | | | | |
|---|---|---|---|---|---|---|---|
| | | | 17 | 18 | 19 | 20 | 21 |
| Blending composition (parts by weight) | Aqueous hybrid resin composition (II) | | - | - | - | - | 100 |
| | Aqueous hybrid resin composition (VII) | | 100 | - | - | - | - |
| | Aqueous hybrid resin composition (VIII) | | - | 100 | - | - | - |
| | Aqueous hybrid resin composition (IX) | | - | - | 100 | - | - |
| | Aqueous hybrid resin composition (X) | | - | - | - | 100 | - |
| | GPTMS | | 1.8 | 4.0 | 4.7 | 0.9 | - |
| | MS-51 | | - | - | - | - | 14 |
| Evaluation | Solvent resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Acid resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Cracking resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Weather resistance (%) | Test plate (1) | 93 | 92 | 97 | 97 | 90 |
| | | Test plate (2) | 94 | 94 | 97 | 97 | 91 |
| | | Test plate (3) | 92 | 92 | 97 | 97 | 89 |
| | Adhesiveness | Test plate (1) | ○ | ○ | ○ | ○ | ○ |
| | | Test plate (2) | ○ | ○ | ○ | ○ | ○ |
| | Adhesiveness with respect to the plastic substrate | PC substrate | ○○ | ○○ | ○○ | ○○ | ○○ |
| | | PET substrate | ○○ | ○○ | ○○ | ○○ | ○○ |
| | | ABS substrate | ○○ | ○○ | ○○ | ○○ | ○○ |
| | | PMMA substrate | Δ | Δ | Δ | Δ | Δ |
| | | PS substrate | Δ | Δ | Δ | Δ | Δ |
| | | PVC substrate | ○○ | ○○ | ○○ | ○○ | ○○ |
| | | NR substrate | Δ | Δ | Δ | Δ | Δ |
| | Elongation with respect to the substrate (coating film elongation: %) | | 220 | 180 | 100 | 90 | 130 |
| | Corrosion resistance | Flat part | ○○ | ○○ | ○○ | ○○ | ○○ |
| | | Cross cut part | ○○ | ○○ | ○○ | ○○ | ○○ |
| | Stain resistance | | 3.2 | 3.2 | 2.8 | 2.8 | 2.9 |

Table 9

| Table 9 | | | Example | | | | |
|---|---|---|---|---|---|---|---|
| | | | 22 | 23 | 24 | 25 | 26 |
| Blending composition (parts by weight) | Aqueous hybrid resin composition (II) | | 100 | 100 | 100 | - | - |
| | Aqueous hybrid resin composition (V) | | - | - | - | 100 | 100 |
| | EX614B | | 2.8 | - | - | 2.9 | - |
| | WS-500 | | - | 8.7 | - | - | 9.2 |
| | V-02 | | - | - | 23.8 | - | - |
| Evaluation | Solvent resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Acid resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Cracking resistance | Test plate (1) | ○ | ○ | ○ | ○ | ○ |
| | | Test plate (2) | ○ | ○ | ○ | ○ | ○ |
| | | Test plate (3) | ○ | ○ | ○ | ○ | ○ |
| | Weather resistance (%) | Test plate (1) | 90 | 90 | 91 | 93 | 93 |
| | | Test plate (2) | 91 | 91 | 92 | 93 | 93 |
| | | Test plate (3) | 90 | 89 | 90 | 95 | 95 |
| | Adhesiveness | Test plate (1) | ○ | ○ | ○ | ○ | ○ |
| | | Test plate (2) | ○ | ○ | ○ | ○ | ○ |
| | Adhesiveness with respect to the plastic substrate | PC substrate | ○○ | ○○ | ○○ | ○○ | ○○ |
| | | PET substrate | ○○ | ○○ | ○○ | ○○ | ○○ |
| | | ABS substrate | ○○ | ○○ | ○○ | ○○ | ○○ |
| | | PMMA substrate | Δ | Δ | Δ | ○○ | ○○ |
| | | PS substrate | Δ | Δ | Δ | ○○ | ○○ |
| | | PVC substrate | ○○ | ○○ | ○○ | ○○ | ○○ |
| | | NR substrate | Δ | Δ | Δ | ○○ | ○○ |
| | Elongation with respect to the substrate (coating film elonqation: %) | | 140 | 170 | 160 | 120 | 120 |
| | Corrosion resistance | Flat part | ○○ | ○○ | ○○ | ○○ | ○○ |
| | | Cross cut part | ○○ | ○○ | ○○ | ○○ | ○○ |
| | Stain resistance | | 3.2 | 3.2 | 3.1 | 3.0 | 3.0 |

Table 10

| Table 10 | | | Comparative Example | | | | | |
|---|---|---|---|---|---|---|---|---|
| | | | 1 | 2 | 3 | 4 | 5 | 6 |
| Blending composition (parts by weight) | Comparative aqueous hybrid resin composition (XI) | | 100 | - | - | - | - | - |
| | Comparative aqueous hybrid resin composition (XII) | | - | 100 | - | - | - | - |
| | Comparative aqueous hybrid resin composition (XIII) | | - | - | 100 | - | 100 | - |
| | Comparative aqueous hybrid resin composition (XIV) | | - | - | - | 100 | - | 100 |
| | GPTMS | | 2.3 | 5.2 | - | - | 3.4 | 3.1 |
| Evaluation | Solvent resistance | Test plate (1) | ○ | ○ | Δ | X | Δ | X |
| | | Test plate (2) | ○ | ○ | Δ | X | Δ | X |
| | | Test plate (3) | - | - | X | X | X | X |
| | Acid resistance | Test plate (1) | ○ | ○ | ○ | ○ | ○ | ○ |
| | | Test plate (2) | ○ | ○ | ○ | ○ | ○ | ○ |
| | | Test plate (3) | - | - | Δ | Δ | Δ | Δ |
| | Cracking resistance | Test plate (1) | X | X | Δ | Δ | Δ | Δ |
| | | Test plate (2) | X | X | Δ | Δ | Δ | Δ |
| | | Test plate (3) | - | - | Δ | Δ | Δ | Δ |
| | Weather resistance (%) | Test plate (1) | 40 | 98 | 13 | 10 | 15 | 10 |
| | | Test plate (2) | 41 | 95 | 12 | 11 | 95 | 11 |
| | | Test plate (3) | - | - | 8 | 9 | 10 | 9 |
| | Adhesiveness | Test plate (1) | Δ | ○ | ○ | ○ | ○ | ○ |
| | | Test plate (2) | Δ | ○ | ○ | ○ | ○ | ○ |
| | Adhesiveness with respect to the plastic substrate | PC substrate | X | X | ○ | ○ | ○ | ○ |
| | | PET substrate | X | X | ○ | ○ | ○ | ○ |
| | | ABS substrate | X | X | Δ | Δ | ○ | ○ |
| | | PMMA substrate | X | X | X | X | X | X |
| | | PS substrate | X | X | X | X | X | X |
| | | PVC substrate | X | X | Δ | Δ | Δ | Δ |
| | | NR substrate | X | X | X | X | X | X |
| | Elongation with respect to the substrate (coating film elongation: %) | | 3 | 3 | 250 | 280 | 120 | 125 |
| | Corrosion resistance | Flat part | ○ | ○○ | X | Δ | Δ | Δ |

(continued)

| Table 10 | | | Comparative Example | | | | | |
|---|---|---|---|---|---|---|---|---|
| | | | 1 | 2 | 3 | 4 | 5 | 6 |
| | | Cross cut part | △ | ○○ | X | X | △ | △ |
| | Stain resistance | | 4.1 | 3.0 | 6.5 | 7.4 | 6.4 | 7.5 |

Table 11

| Table 11 | | | Comparative Example | | | |
|---|---|---|---|---|---|---|
| | | | 7 | 8 | 9 | 10 |
| Blending composition (parts by weight) | Aqueous hybrid resin composition (XV) | | 100 | - | 100 | - |
| | Aqueous hybrid resin composition (XVI) | | - | 100 | - | 100 |
| | GPTMS | | | | 2.3 | 5.2 |
| Evaluation | Solvent resistance | Test plate (1) | ○ | △ | ○ | △ |
| | | Test plate (2) | ○ | △ | ○ | △ |
| | | Test plate (3) | - | △ | - | △ |
| | Acid resistance | Test plate (1) | ○ | ○ | ○ | ○ |
| | | Test plate (2) | ○ | ○ | ○ | ○ |
| | | Test plate (3) | - | △ | - | △ |
| | Cracking resistance | Test plate (1) | △ | △ | △ | △ |
| | | Test plate (2) | X | X | △ | △ |
| | | Test plate (3) | - | X | - | △ |
| | Weather resistance (%) | Test plate (1) | 12 | 15 | 12 | 17 |
| | | Test plate (2) | 2 | 14 | 8 | 14 |
| | | Test plate (3) | 2 | 9 | 5 | 10 |
| | Adhesiveness | Test plate (1) | ○ | ○ | ○ | ○ |
| | | Test plate (2) | ○ | ○ | ○ | ○ |
| | Adhesiveness with respect to the plastic substrate | PC substrate | X | △ | X | △ |
| | | PET substrate | X | △ | X | △ |
| | | ABS substrate | X | X | X | X |
| | | PMMA substrate | X | X | X | X |
| | | PS substrate | X | X | X | X |
| | | PVC substrate | X | X | X | X |
| | | NR substrate | X | X | X | X |
| | Elongation with respect to the substrate (coating film elongation: %) | | 3 | 20 | 2 | 10 |
| | Corrosion resistance | Flat part | △ | X | △ | X |
| | | Cross cut part | X | X | △ | X |
| | Stain resistance | | 4.2 | 7.5 | 4.0 | 7.3 |

**Claims**

1. An aqueous hybrid resin composition **characterized by** comprising:

   a hybrid resin (A) in which a hydrophilic group-containing polyurethane (a1) and a vinyl polymer (a2) are bound via a polysiloxane (a3); and
   an aqueous medium,
   wherein a weight ratio of a structure derived from said polysiloxane (a3) with respect to the total of said hybrid resin (A) ranges from 15% to 55% by weight.

2. The aqueous hybrid resin composition according to claim 1, wherein said hydrophilic group-containing polyurethane (a1) is obtained by reacting a polyol containing a polyether polyol and a hydrophilic group-containing polyol with a polyisocyanate.

3. The aqueous hybrid resin composition according to claim 1, wherein said hydrophilic group-containing polyurethane (a1) is obtained by reacting a polyol containing a polycarbonate polyol and a hydrophilic group-containing polyol with a polyisocyanate.

4. The aqueous hybrid resin composition according to claim 1, wherein a weight ratio, (a2)/(a1), of said hydrophilic group-containing polyurethane (a1) and said vinyl polymer (a2) ranges from 1/1 to 1/20.

5. The aqueous hybrid resin composition according to claim 1, wherein a bond between said hydrophilic group-containing polyurethane (a1) and said polysiloxane (a3) is formed by a reaction between a hydrolyzable silyl group and/or a silanol group which said hydrophilic group-containing polyurethane (a1) has and a hydrolyzable silyl group and/or a silanol group which said polysiloxane (a3) has, and a bond between said vinyl polymer (a2) and said polysiloxane (a3) is formed by a reaction between a hydrolyzable silyl group and/or a silanol group which said vinyl polymer (a2) has and a hydrolyzable silyl group and/or a silanol group which said polysiloxane (a3) has.

6. The aqueous hybrid resin composition according to claim 1, wherein said vinyl polymer (a2) is obtained by polymerizing vinyl monomers containing one or more monomers selected from the group consisting of hydrolyzable silyl group-containing vinyl monomers and silanol group-containing vinyl monomers.

7. The aqueous hybrid resin composition according to claim 1, wherein said polysiloxane (a3) has one or more types selected from the group consisting of an aromatic cyclic structure binding to a silicon atom, an alkyl group with 1 to 3 carbon atoms binding to a silicon atom, and an alkoxy group with 1 to 3 carbon atoms binding to a silicon atom.

8. The aqueous hybrid resin composition according to claim 1, wherein said polysiloxane (a3) is a product obtained by a reaction between a polysiloxane (a3-1) having one or more structures selected from the group consisting of structures shown by the following general formulae (I) and (II):

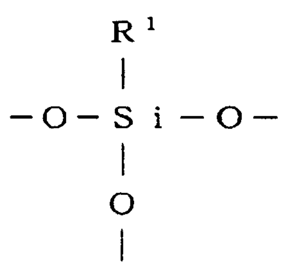

(I)

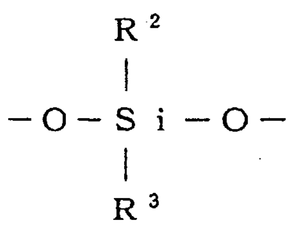

(II)

wherein $R^1$ represents an organic group with 4 to 12 carbon atoms binding to a silicon atom; and $R^2$ and $R^3$ independently represent a methyl group binding to a silicon atom or an ethyl group binding to a silicon atom, and a condensate (a3-2) of an alkyltrialkoxysilane in which the alkyl group thereof has 1 to 3 carbon atoms.

**9.** A coating preparation comprising the aqueous hybrid resin composition as recited in any one of claims 1 to 8.

**10.** Use of a coating preparation on a metal substrate comprising the aqueous hybrid resin composition as recited in any one of claims 1 to 8.

**11.** A steel-surface-treatment preparation comprising the coating preparation as recited in claim 10.

**12.** A laminate having a coating film formed by means of the steel-surface-treatment preparation as recited in claim 11, on the surface of a metal substrate which is not chromate-treated.

**13.** Use of a coating preparation on a plastic substrate, comprising the aqueous hybrid resin composition as recited in claim 3.

**14.** A laminate having a coating film formed by means of use of the coating preparation on a plastic substrate as recited in claim 13, on the surface of a plastic substrate selected from the group consisting of a polycarbonate substrate, a polyester substrate, an acrylonitirle-butadiene-styrene substrate, a polyacryl substrate, a polystyrene substrate, a polyurethane substrate, an epoxy resin substrate, a polyvinyl chloride-based substrate, and a polyamide-based substrate.

**15.** A method for producing the aqueous hybrid resin composition as recited in claim 1 comprising the following steps (I) to (IV) of:

(I) polymerizing vinyl monomers containing one or more monomers selected from the group consisting of hydrolyzable silyl group-containing vinyl monomers and silanol group-containing vinyl monomers in the presence of an organic solvent to obtain an organic-solvent solution of a vinyl polymer (a2);
(II) reacting said vinyl polymer (a2) and a silane compound in the presence of said organic-solvent solution of vinyl polymer (a2) to obtain an organic-solvent solution of a resin (C) in which a polysiloxane (a3) is bound to said vinyl polymer (a2);
(III) mixing and reacting said resin (C) and a hydrophilic group-containing polyurethane (a1) to obtain an organic-solvent solution of a hybrid resin (A) in which said vinyl polymer (a2) and said hydrophilic group-containing polyurethane (a1) are bound via said polysiloxane (a3); and
(VI) neutralizing the hydrophilic group which said hybrid resin (A) has and dissolving or dispersing said neutralized product in an aqueous medium.

## Patentansprüche

**1.** Wässrige Hybridharzzusammensetzung, dadurch **gekennzeichnet**, dass sie umfasst:

ein Hybridharz (A), in dem ein Polyurethan (a1), das eine hydrophile Gruppe enthält, und ein Vinylpolymer (a2) über ein Polysiloxan (a3) verbunden sind; und
ein wässriges Medium,
wobei ein Gewichtsverhältnis einer Struktur, die von dem genannten Polysiloxan (a3) abgeleitet ist, in Bezug auf die Gesamtheit des genannten Hybridharzes (A) von 15 Gewichtsprozent bis 55 Gewichtsprozent reicht.

**2.** Wässrige Hybridharzzusammensetzung gemäß Anspruch 1, wobei das genannte Polyurethan (a1), das eine hydrophile Gruppe enthält, durch Umsetzen eines Polyols, das ein Polyetherpolyol enthält, und eines Polyols, das eine hydrophile Gruppe enthält, mit einem Polyisocyanat erhalten wird.

**3.** Wässrige Hybridharzzusammensetzung gemäß Anspruch 1, wobei das genannte Polyurethan (a1), das eine hydrophile Gruppe enthält, durch Umsetzen eines Polyols, das ein Polycarbonatpolyol enthält, und eines Polyols, das eine hydrophile Gruppe enthält, mit einem Polyisocyanat erhalten wird.

**4.** Wässrige Hybridharzzusammensetzung gemäß Anspruch 1, wobei ein Gewichtsverhältnis, (a2)/(a1), des genannten

Polyurethans (a1), das eine hydrophile Gruppe enthält, und des genannten Vinylpolymers (a2) von 1/1 bis 1/20 reicht.

5. Wässrige Hybridharzzusammensetzung gemäß Anspruch 1, wobei eine Bindung zwischen dem genannten Polyurethan (a1), das eine hydrophile Gruppe enthält, und dem genannten Polysiloxan (a3) durch eine Reaktion zwischen einer hydrolysierbaren Silylgruppe und/oder einer Silanolgruppe, die das genannte Polyurethan (a1), das eine hydrophile Gruppe hat, hat, und einer hydrolysierbaren Vinylgruppe und/oder einer Silanolgruppe, die das genannte Polysiloxan (a3) hat, gebildet wird, und eine Bindung zwischen dem genannten Vinylpolymer (a2) und dem genannten Polysiloxan (a3) durch eine Reaktion zwischen einer hydrolysierbaren Silylgruppe und/oder einer Silanolgruppe, die das genannte Vinylpolymer (a2) hat, und einer hydrolysierbaren Silylgruppe und/oder einer Silanolgruppe, die das genannte Polysiloxan (a3) hat, gebildet wird.

6. Wässrige Hybridharzzusammensetzung gemäß Anspruch 1, wobei das genannte Vinylpolymer (a2) durch Polymerisieren von Vinylmonomeren, die ein oder mehrere Monomer(e) enthalten, ausgewählt aus der Gruppe, bestehend aus Vinylmonomeren, die hydrolysierbare Silylgruppen enthalten, und Vinylmonomeren, die Silanolgruppen enthalten, erhalten wird.

7. Wässrige Hybridharzzusammensetzung gemäß Anspruch 1, wobei das genannte Polysiloxan (a3) einen oder mehr Typ(en), ausgewählt aus der Gruppe, bestehend aus einer aromatischen zyklischen Struktur, die an ein Siliciumatom bindet, einer Alkylgruppe mit 1 bis 3 Kohlenstoffatomen, die an ein Siliciumatom bindet, und einer Alkoxygruppe mit 1 bis 3 Kohlenstoffatomen, die an ein Siliciumatom bindet, hat.

8. Wässrige Hybridharzzusammensetzung gemäß Anspruch 1, wobei das genannte Polysiloxan (a3) ein Produkt ist, das durch eine Reaktion zwischen einem Polysiloxan (a3-1), das eine oder mehrere Struktur(en), ausgewählt aus der Gruppe, bestehend aus Strukturen, die durch die folgenden allgemeinen Formeln (I) und (II) gezeigt werden:

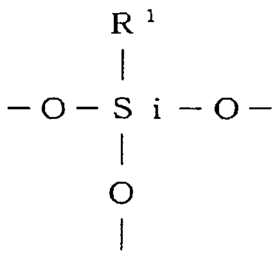
(I)

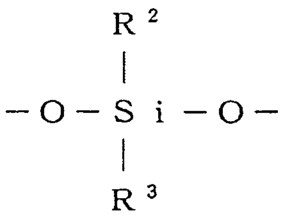
(II)

worin $R^1$ eine organische Gruppe mit 4 bis 12 Kohlenstoffatomen, die an ein Siliciumatom bindet, darstellt; und $R^2$ und $R^3$ unabhängig eine Methylgruppe, die an ein Siliciumatom bindet, oder eine Ethylgruppe, die an ein Siliciumatom bindet, darstellen,
und einem Kondensat (a3-2) eines Alkyltrialkoxysilans, in dem die Alkylgruppe davon 1 bis 3 Kohlenstoffatome hat, erhalten wird.

9. Beschichtungszubereitung, die die wässrige Hybridharzzusammensetzung, die in einem der Ansprüche 1 bis 8 angegeben ist, umfasst.

10. Verwendung einer Beschichtungszubereitung auf einem Metallsubstrat, die die wässrige Hybridharzzusammensetzung, die in einem der Ansprüche 1 bis 8 angegeben ist, umfasst.

11. Stahloberflächenbehandlungszubereitung, die die Beschichtungszubereitung, die in Anspruch 10 angegeben ist, umfasst.

12. Laminat, das einen Beschichtungsfilm, der mittels der Stahloberflächenbehandlungszubereitung, die in Anspruch 11 angegeben ist, auf der Oberfläche eines Metallsubstrats, das nicht chromatbehandelt ist, gebildet ist, hat.

13. Verwendung einer Beschichtungszubereitung auf einem Plastiksubstrat, die die wässrige Hybridharzzusammensetzung, die in Anspruch 3 angegeben ist, umfasst.

14. Laminat, das einen Beschichtungsfilm, der mittels der Verwendung der Beschichtungszubereitung auf einem Plastiksubstrat gebildet ist, die in Anspruch 13 angegeben ist, auf der Oberfläche eines Plastiksubstrats, ausgewählt aus der Gruppe, bestehend aus einem Polycarbonatsubstrat, einem Polyestersubstrat, einem Acrylonitril-Butadien-Styrol-Substrat, einem Polyacrylsubstrat, einem Polystyrolsubstrat, einem Polyurethansubstrat, einem Epoxyharzsubstrat, einem Polyvinylchloridbasierten Substrat und einem Polyamid-basierten Substrat, hat.

15. Verfahren zur Herstellung der wässrigen Hybridharzzusammensetzung, die in Anspruch 1 angegeben ist, das die folgenden Schritte (I) bis (IV) umfasst:

(I) Polymerisieren von Vinylmonomeren, die ein oder mehrere Monomer(e), ausgewählt aus der Gruppe, bestehend aus Vinylmonomeren, die eine hydrolysierbare Silylgruppe enthalten, und Vinylmonomeren, die eine Silanolgruppe enthalten, in der Gegenwart eines organischen Lösemittels unter Erhalt einer organischen Lösemittellösung eines Vinylpolymers (a2);
(II) Umsetzen des genannten Vinylpolymers (a2) und einer Silanverbindung in der Gegenwart der genannten organischen Lösemittellösung von Vinylpolymer (a2) unter Erhalt einer organischen Lösemittellösung eines Harzes (C), in dem ein Polysiloxan (a3) an das genannte Vinylpolymer (a2) gebunden ist;
(III) Mischen und Umsetzen des genannten Harzes (C) und eines Polyurethans (a1), das eine hydrophile Gruppe enthält, unter Erhalt einer organischen Lösemittellösung eines Hybridharzes (A), in dem das genannte Vinylpolymer (a2) und das genannte Polyurethan (a1), das eine hydrophile Gruppe enthält, über das genannte Polysiloxan (a3) verbunden sind; und
(VI) Neutralisieren der hydrophilen Gruppe, die das genannte Hybridharz (A) hat, und Lösen oder Dispergieren des genannten neutralisierten Produkts in einem wässrigen Medium.

**Revendications**

1. Composition de résine hybride aqueuse **caractérisée en ce qu'**elle comprend :

une résine hybride (A) dans laquelle un poly(uréthane) contenant un groupe hydrophile (a1) et un polymère vinylique (a2) sont liés via un poly(siloxane) (a3) ; et
un milieu aqueux,
dans laquelle un rapport de poids d'une structure dérivée dudit poly(siloxane) (a3) par rapport au total de ladite résine hybride (A) va de 15 % à 55 % en poids.

2. Composition de résine hybride aqueuse selon la revendication 1, dans laquelle ledit poly(uréthane) contenant un groupe hydrophile (a1) est obtenu en faisant réagir un polyol contenant un poly(éther) polyol et un polyol contenant un groupe hydrophile avec un poly(isocyanate).

3. Composition de résine hybride aqueuse selon la revendication 1, dans laquelle ledit poly(uréthane) contenant un groupe hydrophile (a1) est obtenu en faisant réagir un polyol contenant un poly(carbonate) polyol et un polyol contenant un groupe hydrophile avec un poly(isocyanate).

4. Composition de résine hybride aqueuse selon la revendication 1, dans laquelle un rapport de poids, (a2)/(a1), entre ledit poly(uréthane) contenant un groupe hydrophile (a1) et ledit polymère vinylique (a2) va de 1/1 à 1/20.

5. Composition de résine hybride aqueuse selon la revendication 1, dans laquelle une liaison entre ledit poly(uréthane) contenant un groupe hydrophile (a1) et ledit poly(siloxane) (a3) est formée par une réaction entre un groupe silyle hydrolysable et/ou un groupe silanol que comporte ledit poly(uréthane) contenant un groupe hydrophile (a1) et un groupe silyle hydrolysable et/ou un groupe silanol que comporte ledit poly(siloxane) (a3), et une liaison entre ledit polymère vinylique (a2) et ledit poly(siloxane) (a3) est formée par une réaction entre un groupe silyle hydrolysable et/ou un groupe silanol que comporte ledit polymère vinylique (a2) et un groupe silyle hydrolysable et/ou un groupe silanol que comporte ledit poly(siloxane) (a3).

**6.** Composition de résine hybride aqueuse selon la revendication 1, dans laquelle ledit polymère vinylique (a2) est obtenu en polymérisant des monomères vinyliques contenant un ou plusieurs monomères choisis dans le groupe consistant en des monomères vinyliques contenant un groupe silyle hydrolysable et des monomères vinyliques contenant un groupe silanol.

**7.** Composition de résine hybride aqueuse selon la revendication 1, dans laquelle ledit poly(siloxane) (a3) comporte un ou plusieurs types choisis dans le groupe consistant en une structure cyclique aromatique se liant à un atome de silicium, un groupe alkyle avec 1 à 3 atomes de carbone se liant à un atome de silicium, et un groupe alcoxy avec 1 à 3 atomes de carbone se liant à un atome de silicium.

**8.** Composition de résine hybride aqueuse selon la revendication 1, dans laquelle ledit poly(siloxane) (a3) est un produit obtenu par une réaction entre un poly(siloxane) (a3-1) comportant une ou plusieurs structures choisies dans le groupe consistant en des structures représentées par les formules générales (I) et (II) suivantes :

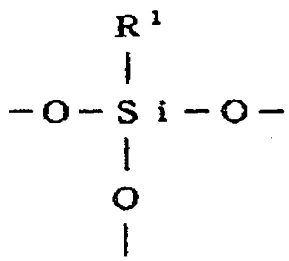

(I)

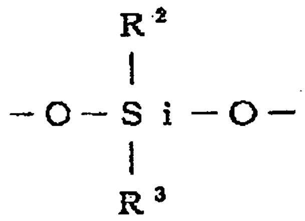

(II)

dans lesquelles $R^1$ représente un groupe organique avec 4 à 12 atomes de carbone se liant à un atome de silicium ; et $R^2$ et $R^3$ représentent indépendamment un groupe méthyle se liant à un atome de silicium ou un groupe éthyle se liant à un atome de silicium,
et un condensat (a3-2) d'un alkyltrialcoxysilane dont le groupe alkyle comporte 1 à 3 atomes de carbone.

**9.** Préparation de revêtement comprenant la composition de résine hybride aqueuse telle qu'exposée dans l'une quelconque des revendications 1 à 8.

**10.** Utilisation d'une préparation de revêtement sur un substrat métallique comprenant la composition de résine hybride aqueuse telle qu'exposée dans l'une quelconque des revendications 1 à 8.

**11.** Préparation de traitement de surface en acier comprenant la préparation de revêtement telle qu'exposée dans la revendication 10.

**12.** Stratifié comportant un film de revêtement formé au moyen de la préparation de traitement de surface en acier telle qu'exposée dans la revendication 11, sur la surface d'un substrat métallique qui n'est pas traité au chromate.

**13.** Utilisation d'une préparation de revêtement sur un substrat en plastique, comprenant la composition de résine hybride aqueuse telle qu'exposée dans la revendication 3.

**14.** Stratifié comportant un film de revêtement formé au moyen de l'utilisation de la préparation de revêtement sur un substrat en plastique telle qu'exposée dans la revendication 13, sur la surface d'un substrat en plastique choisi dans le groupe consistant en un substrat en poly(carbonate), un substrat en poly(ester), un substrat en acrylonitrile-butadiène-styrène, un substrat en poly(acryle), un substrat en poly(styrène), un substrat en poly(uréthane), un substrat en résine époxy, un substrat à base de poly(chlorure de vinyle) et un substrat à base de poly(amide).

**15.** Procédé de production de la composition de résine hybride aqueuse telle qu'exposée dans la revendication 1, comprenant les étapes (I) à (IV) suivantes de :

(I) polymérisation de monomères vinyliques contenant un ou plusieurs monomères choisis dans le groupe consistant en des monomères vinyliques contenant un groupe silyle hydrolysable et des monomères vinyliques contenant un groupe silanol en présence d'un solvant organique afin d'obtenir une solution de solvant organique d'un polymère vinylique (a2) ;
(II) réaction dudit polymère vinylique (a2) et d'un composé silane en présence de ladite solution de solvant organique du polymère vinylique (a2) afin d'obtenir une solution de solvant organique d'une résine (C) dans laquelle un poly(siloxane) (a3) est lié audit polymère vinylique (a2) ;
(III) mélange et réaction de ladite résine (C) et d'un poly(uréthane) contenant un groupe hydrophile (a1) afin d'obtenir une solution de solvant organique d'une résine hybride (A) dans laquelle ledit polymère vinylique (a2) et ledit poly(uréthane) contenant un groupe hydrophile (a1) sont liés via ledit poly(siloxane) (a3) ; et
(IV) neutralisation du groupe hydrophile que comporte ladite résine hybride (A) et dissolution ou dispersion dudit produit neutralisé dans un milieu aqueux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11279408 B
- JP 2003027254 A
- JP 2004204333 A
- JP 2003253021 A